# EUROPEAN PATENT APPLICATION

(11) **EP 3 757 808 A1**
(43) Date of publication of application: **30.12.2020**
(21) Application number: 20188697.5
(22) Date of filing: 20.02.2015
(51) Int. Cl.: G06F 13/00, G06F 3/048, G06F 13/14, G06F 3/0481, G06F 3/0484

(54) **TERMINAL DEVICE, SYSTEM, METHOD OF INFORMATION PRESENTATION, AND PROGRAM**

(30) Priority: 15.05.2014 JP 2014101508
(62) Document number(s) of the earlier application(s) in accordance with Art. 76 EPC: 15793166.8 / 3 144 819
(71) Applicant: Sony Corporation, Tokyo 108-0075 (JP)
(72) Inventor: KONDO, Genta, Tokyo, 108-0075 (JP); HAGIWARA, Takehiro, Tokyo, 108-0075 (JP); MASUDA, Hiroyuki, Tokyo, 108-0075 (JP); TAKIZAWA, Hiromu, Tokyo, 108-0075 (JP)
(74) Representative: MFG Patentanwälte Meyer-Wildhagen Meggle-Freund Gerhard PartG mbB

(57) **Abstract**

[Object] To make it easy to recognize the association of information of a device registered in a system with an actual device.

[Solution] Provided is a terminal device including: a signal reception unit configured to receive a first signal outputted from one or more devices in a system; a positional relationship specifying unit configured to specify a positional relationship between the terminal device and the one or more devices based on the first signal; an identification information extraction unit configured to extract identification information of the one or more devices in the system from the first signal; and means for presenting setting information of the one or more devices in the system in association with the one or more devices based on the identification information and the positional relationship.

## Description

### Technical Field

The present disclosure relates to a terminal device, a system, a method of information presentation, and a program.

### Background Art

A plurality of devices function in conjunction with each other in a home or the like, which has been more common. As one example, Patent Literature 1 discloses a technique for supporting effectively the use of a function implemented by the conjunction of devices.

### Citation List

### Patent Literature

Patent Literature 1: JP 2014-32501A

### Summary of Invention

### Technical Problem

In the technique disclosed in Patent Literature 1 described above, the use of a console displayed on a screen of a smartphone allows an operation such as registration of a device to a system to be performed. However, in the technique disclosed in Patent Literature 1, examples of a target having a conjunction function include televisions, recorders, game machines, and personal computers, and thus the association of an actual device with information on the device registered in the system is easy to be recognized.

On the other hand, as one example, a plurality of devices with a conjunction function have similar appearance, the installation place can be moved freely, or a plurality of the same type of devices are provided, it is not necessarily easy to recognize the association of an actual device with information on the device registered in the system. In such a case, as one example, the technique as disclosed in Patent Literature 1 described above may be difficult to provide sufficient convenience to the user.

Therefore, the present disclosure provides a novel and improved terminal device, system, method of information presentation, and program, which makes it easy to recognize the association of information of a device registered in a system with an actual device.

### Solution to Problem

According to the present disclosure, there is provided a terminal device including: a signal reception unit configured to receive a first signal outputted from one or more devices in a system; a positional relationship specifying unit configured to specify a positional relationship between the terminal device and the one or more devices based on the first signal; an identification information extraction unit configured to extract identification information of the one or more devices in the system from the first signal; and means for presenting setting information of the one or more devices in the system in association with the one or more devices based on the identification information and the positional relationship.

According to the present disclosure, there is provided a system including: one or more devices; and a terminal device. The one or more devices output a first signal. The terminal device includes a signal reception unit configured to receive the first signal, a positional relationship specifying unit configured to specify a positional relationship between the terminal device and the one or more devices based on the first signal, an identification information extraction unit configured to extract identification information of the one or more devices in the system from the first signal, and means for presenting setting information of the one or more devices in the system in association with the one or more devices based on the identification information and the positional relationship.

According to the present disclosure, there is provided a method of information presentation, the method including: outputting a first signal by one or more devices in a system; receiving the first signal by a terminal device; specifying a positional relationship between the terminal device and the one or more devices based on the first signal and extracting identification information of the one or more devices in the system from the first signal, by using a processing circuit; and presenting setting information of the one or more devices in the system in association with the one or more devices based on the identification information and the positional relationship.

According to the present disclosure, there is provided a program executed in a processing circuit of a terminal device to implement: a function of receiving a first signal outputted from one or more devices in a system; a function of specifying a positional relationship between the terminal device and the one or more devices based on the first signal; a function of extracting identification information of the one or more devices in the system from the first signal; and means for presenting setting information of the one or more devices in the system in association with the one or more devices based on the identification information and the positional relationship.

### Advantageous Effects of Invention

According to the present disclosure described above, the association of information of a device registered in a system with an actual device can be easily recognized.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an overall configuration of a system to which a technology according to an embodiment of the present disclosure can be applied.
[FIG. 2] FIG. 2 is a diagram illustrating a first specific configuration example of the system illustrated in FIG. 1.
[FIG. 3] FIG. 3 is a diagram illustrating a second specific configuration example of the system illustrated in FIG. 1.
[FIG. 4] FIG. 4 is a diagram illustrating a third specific configuration example of the system illustrated in FIG. 1.
[FIG. 5] FIG. 5 is a diagram illustrating a fourth specific configuration example of the system illustrated in FIG. 1.
[FIG. 6] FIG. 6 is a diagram illustrating a fifth specific configuration example of the system illustrated in FIG. 1.
[FIG. 7] FIG. 7 is a diagram illustrating a sixth specific configuration example of the system illustrated in FIG. 1.
[FIG. 8] FIG. 8 is a diagram illustrating a seventh specific configuration example of the system illustrated in FIG. 1.
[FIG. 9] FIG. 9 is a diagram illustrating an eighth specific configuration example of the system illustrated in FIG. 1.
[FIG. 10] FIG. 10 is a diagram illustrating a first example of a UI provided in the system illustrated in FIG. 1.
[FIG. 11] FIG. 11 is a diagram illustrating a second example of a UI provided in the system illustrated in FIG. 1.
[FIG. 12] FIG. 12 is an explanatory diagram illustrating a first specific example of a conjunction operation of elements in the system illustrated in FIG. 1.
[FIG. 13] FIG. 13 is an explanatory diagram illustrating a second specific example of a conjunction operation of elements in the system illustrated in FIG. 1.
[FIG. 14] FIG. 14 is an explanatory diagram illustrating a third specific example of a conjunction operation of elements in the system illustrated in FIG. 1.
[FIG. 15] FIG. 15 is an explanatory diagram illustrating a fourth specific example of a conjunction operation of elements in the system illustrated in FIG. 1.
[FIG. 16] FIG. 16 is an explanatory diagram illustrating a fifth specific example of a conjunction operation of elements in the system illustrated in FIG. 1.
[FIG. 17] FIG. 17 is an explanatory diagram illustrating a sixth specific example of a conjunction operation of elements in the system illustrated in FIG. 1.
[FIG. 18] FIG. 18 is a schematic diagram illustrating an exemplary configuration according to a first embodiment of the present disclosure.
[FIG. 19] FIG. 19 is a diagram illustrating an example of display of setting information in the example illustrated in FIG. 18.
[FIG. 20] FIG. 20 is a diagram illustrating a state in which the user performs a setting change operation in the example illustrated in FIG. 18.
[FIG. 21] FIG. 21 is a diagram illustrating display of setting information change in the example illustrated in FIG. 20.
[FIG. 22] FIG. 22 is a block diagram illustrating an exemplary functional configuration of a UI device according to the first embodiment of the present disclosure.
[FIG. 23] FIG. 23 is a block diagram illustrating an exemplary functional configuration of elements according to the first embodiment of the present disclosure.
[FIG. 24] FIG. 24 is a sequence diagram illustrating a first procedure of a process according to the first embodiment of the present disclosure.
[FIG. 25] FIG. 25 is a sequence diagram illustrating a second procedure of a process according to the first embodiment of the present disclosure.
[FIG. 26] FIG. 26 is a sequence diagram illustrating a third procedure of a process according to the first embodiment of the present disclosure.
[FIG. 27] FIG. 27 is a diagram illustrated to describe a modified example of the first embodiment of the present disclosure.
[FIG. 28] FIG. 28 is a schematic diagram illustrating an exemplary configuration according to a second embodiment of the present disclosure.
[FIG. 29] FIG. 29 is a block diagram illustrating an exemplary functional configuration of a UI device according to the second embodiment of the present disclosure.
[FIG. 30] FIG. 30 is a block diagram illustrating an exemplary functional configuration of a presentation device according to the second embodiment of the present disclosure.
[FIG. 31] FIG. 31 is a sequence diagram illustrating a first procedure of a process according to the second embodiment of the present disclosure.
[FIG. 32] FIG. 32 is a sequence diagram illustrating a second procedure of a process according to the second embodiment of the present disclosure.
[FIG. 33] FIG. 33 is a diagram illustrated to describe a modified example of the second embodiment of the present disclosure.
[FIG. 34] FIG. 34 is a schematic diagram illustrating an exemplary configuration according to a third embodiment of the present disclosure.
[FIG. 35] FIG. 35 is a block diagram illustrating an exemplary hardware configuration of an information processing device according to an embodiment of the present disclosure.

### Description of Embodiment(s)

Hereinafter, preferred embodiments of the present disclosure will be described in detail with reference to the appended drawings. In this specification and the drawings, elements that have substantially the same function and structure are denoted with the same reference signs, and repeated explanation is omitted.

The description will be made in the following order.
1. Example of applicable system
   1-1. Overall configuration
   1-2. Specific configuration examples
   1-3. Examples of user interface
   1-4. Examples of conjunction operations
2. Embodiments of present disclosure
   2-1. First embodiment
   2-2. Second embodiment
   2-3. Third embodiment
3. Hardware configuration
4. Supplement

### (1. Example of applicable system)

### (1-1. Overall configuration)

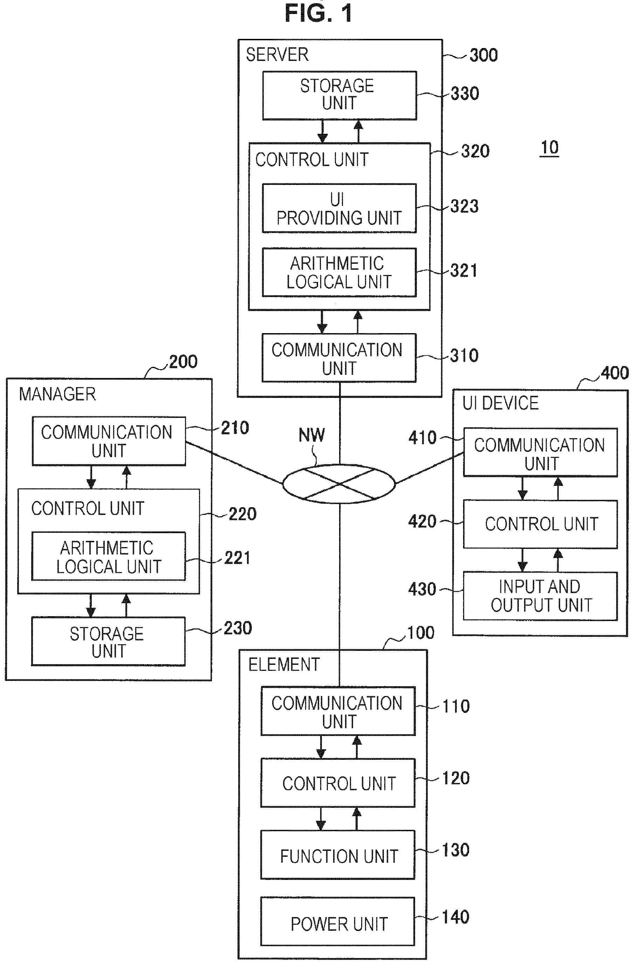

FIG. 1 is a diagram illustrating an overall configuration of a system to which a technology according to an embodiment of the present disclosure can be applied. Referring to FIG. 1, a system 10 includes an element 100, a manager 200, a server 300, and a user interface (UI) device 400. These devices are mutually connected via a network NW An example of the network NW includes Bluetooth (registered trademark), Wi-Fi, and the Internet. The system 10 will be described below as an example, but the technology according to the embodiment of the present disclosure can also be applied to various other systems.

The element 100 is a device that includes a communication unit 110, a control unit 120, a function unit 130, and a power unit 140. The communication unit 110 includes a communication device that communicates with the manager 200 and/or another element 100 via the network NW The control unit 120 is implemented by, for example, a microcontroller or a central processing unit (CPU) and controls the function unit 130. The function unit 130 includes, for example, a sensor or an actuator and implements a unique function of each element 100. The power unit 140 includes a battery or a power plug and supplies power to operate the communication unit 110, the control unit 120, and the function unit 130. A power unit is included in not only the element 100 but also the other devices, but is not illustrated.

The manager 200 is a device that includes a communication unit 210, a control unit 220, and a storage unit 230. The communication unit 210 can include a communication device that communicates with the element 100, the server 300, and the UI device 400 via the network NW The control unit 220 is implemented by, for example, a microcontroller or a CPU and controls communication between the elements 100 and between the element 100 and the server 300 via the communication unit 210. The control unit 220 can include an arithmetic logical unit 221. The arithmetic logical unit 221 performs the arithmetic logical operation on information received from the element 100, information transmitted to the element 100, information transmitted to the server 300, information received from the server 300, and the like. The storage unit 230 includes a memory or storage and stores information exchanged through the communication controlled by the control unit 220, information calculated by the arithmetic logical unit 221, and the like.

The server 300 includes a communication unit 310, a control unit 320, and a storage unit 330. The communication unit 310 includes a communication device that communicates with the manager 200 via the network NW The control unit 320 is implemented by, for example, a microcontroller or a CPU and can include an arithmetic logical unit 321 and a UI providing unit 323. The arithmetic logical unit 321 performs the arithmetic logical operation on information received from the element 100 or the manager 200, information transmitted to the element 100 or the manager 200, information received from another server, information transmitted to another server, and the like. The UI providing unit 323 provides a UI so that a user can specify a combination of the element 100 and/or the manager 200 and check various kinds of information. For example, the UI is provided via a display, a touch panel, or the like included in an input and output unit 430 of the UI device 400. The storage unit 330 includes a memory or storage and stores various kinds of information regarding the element 100, a program causing the plurality of elements 100 to operate in combination, software that can be combined with the element 100, information calculated by the arithmetic logical unit 321, and the like.

Here, the storage unit 330 of the server 300 stores, for example, identification information (ID) of the element 100 in the system 10. The element 100 can be added to the system 10 at any time. The storage unit 330 also stores a program causing the plurality of elements 100 to operate in combination. A program can be added at any time by, for example, a user, a developer, or a system administrator. The storage unit 330 stores software. For example, when the software is executed in combination with the element 100, a function is implemented. Alternatively, a function may also be implemented by executing software in combination. Examples of the functions by which software is implemented can include provision of materials such as audio or an image, a timer, a calendar, an analysis function for image recognition, audio recognition, and the like, and an information acquisition function from an external service such as a weather forecast or news. Software can be added at any time by, for example, a user, a developer, or a system administrator.

On the other hand, for example, the UI providing unit 323 of the server 300 provides a UI via the display, the touch panel, or the like included in the input and output unit 430 of the UI device 400. For example, the user can select a program for causing the plurality of elements 100 to operate in combination via the UI from programs preinstalled in the elements 100 or the manager 200 and programs provided by the server 300. The user can also specify a combination of the plurality of elements 100, a combination of the element 100 and software, or a combination of a plurality of types of software via the UI. When the specified combination is stored as a program in the storage unit 330 of the server 300 and the program is executed by the element 100 and the software, the user can obtain a desired application.

The UI device 400 is a device that includes a communication unit 410, a control unit 420, and the input and output unit 430. The communication unit 410 can include a communication device that communicates with the manager 200 and the server 300 via the network NW The control unit 420 is implemented by, for example, a microcontroller or a CPU to control the input and output unit 430 and control exchange of information via the communication unit 410. The input and output unit 430 includes, for example, a display, a speaker, and a touch panel, presents various kinds of information to the user via the UI, and receives a manipulation input from the user.

### (1-2. Specific configuration examples)

### (First example)

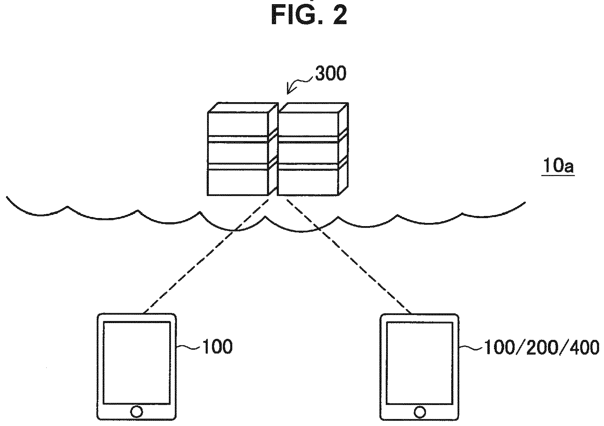

FIG. 2 is a diagram illustrating a first specific configuration example of the system illustrated in FIG. 1. Referring to FIG. 2, a system 10a includes a first tablet functioning as an element 100, a second tablet functioning as the element 100, a manager 200, and a UI device 400, and a server 300.

Both of the first and second tablets similarly include a display, a touch panel, a CPU, and a sensor. In the system 10a, one of the two tablets functions as the element 100, the manager 200, and the UI device 400 and the other tablet functions as the element 100. The roles of these tablets may be compatible and tablets functioning as the manager 200 and the UI device 400 may switch according to a circumstance. In the system 10a, for example, a function desired by the user can be implemented by using various sensors of the tablets and operating the two tablets in combination.

In the example illustrated in FIG. 2, the first and second tablets are examples of terminal devices including the function unit 130 (a sensor or the like) functioning as the element 100 and the control unit 220 (a CPU or the like) functioning as the manager 200. The terminal devices are not limited to the tablets, but may be other devices such as smartphones. The number of terminal devices included in the system 10a is not limited to the number in the illustrated example. For example, three or more terminal devices may be used.

### (Second example)

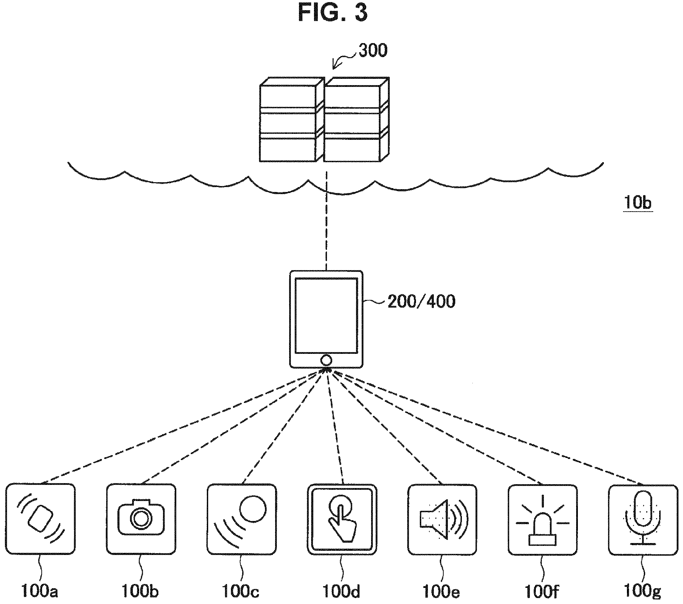

FIG. 3 is a diagram illustrating a second specific configuration example of the system illustrated in FIG. 1. Referring to FIG. 3, a system 10b includes elements 100a to 100g, a tablet functioning as a manager 200 and a UI device 400, and a server 300.

In the system 10b, the tablet functions as the manager 200 and the UI device 400. As in the foregoing first example, the tablet may be replaced with another device such as a smartphone. In the illustrated example, the elements 100 include an acceleration sensor 100a, a camera 100b, a human detection sensor 100c, a button 100d, a speaker 100e, a light-emitting diode (LED) lamp 100f, and a microphone 100g. Each of the elements 100 communicates with the tablet through wireless communication such as Bluetooth (registered trademark) and performs a conjunction operation under the control of the manager 200 implemented by the tablet.

In the following examples, some or all of the acceleration sensor 100a to the microphone 100g are illustrated as examples of the elements 100, but kinds of the elements 100 are not intended to be limited to those used in any of the examples. In each of the examples, the system 10 can include any of the acceleration sensor 100a to the microphone 100g or any other kinds of elements 100.

### (Third example)

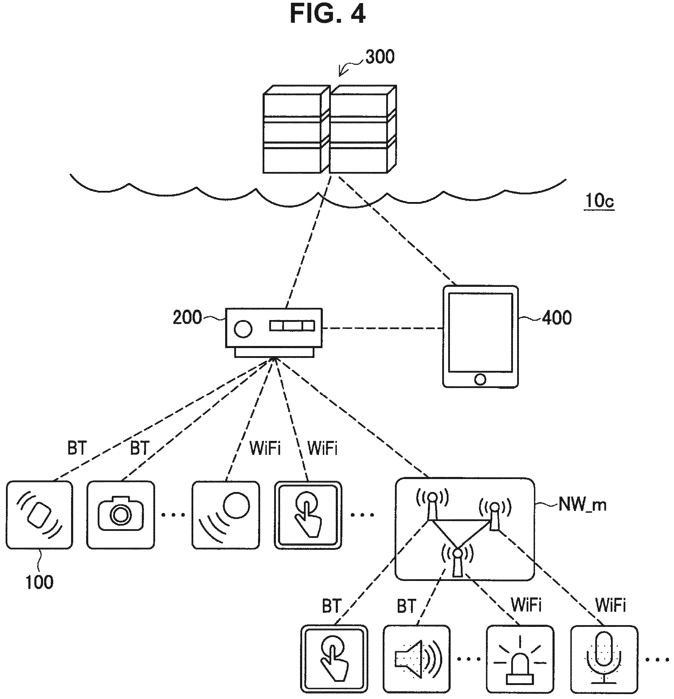

FIG. 4 is a diagram illustrating a third specific configuration example of the system illustrated in FIG. 1. Referring to FIG. 4, a system 10c includes elements 100, a manager 200, a tablet functioning as a UI device 400, and a server 300.

In the system 10c, the manager 200 is present independently from the tablet functioning as the UI device 400. For example, the manager 200 may be implemented by a dedicated device or may be implemented as one of the functions of a base station of Wi-Fi or the like. As in the foregoing first and second examples, the tablet functioning as the UI device 400 may be replaced with another device such as a smartphone. The manager 200 and the tablet can independently communicate with the server 300. When settings of the system 10c are changed through a UI provided by the tablet, the tablet may transmit setting information directly to the manager 200 via Wi-Fi or the like.

In the example of FIG. 4, not only Bluetooth (registered trademark) but also Wi-Fi is used for the communication between the manager 200 and the elements 100. A mesh network repeater NW_m by Wi-Fi or the like is used for connection to the elements 100 located at remote places. An embodiment of the present disclosure is not limited to the illustrated third example. In other examples, various types of wireless communication such as Bluetooth (registered trademark) or Wi-Fi can also be used for communication between the elements 100 and the manager 200 and/or between the elements 100.

### (Fourth example)

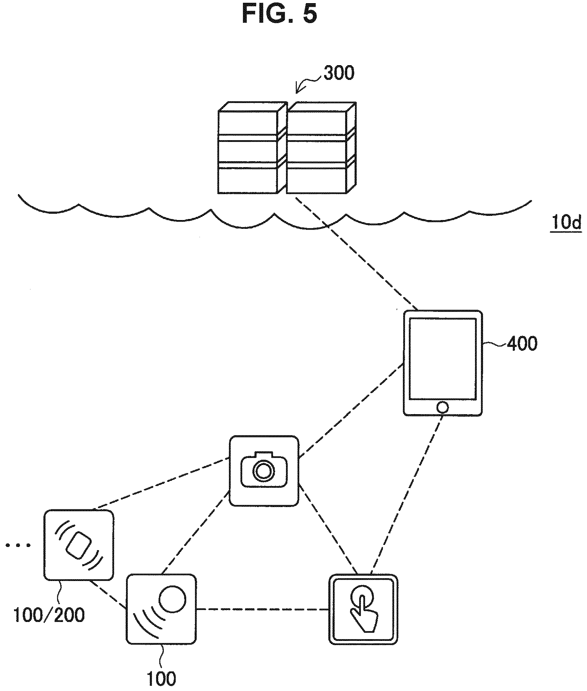

FIG. 5 is a diagram illustrating a fourth specific configuration example of the system illustrated in FIG. 1. Referring to FIG. 5, a system 10d includes elements 100 of which some also function as a manager 200, a tablet functioning as a UI device 400, and a server 300.

Unlike the foregoing first to third examples, at least one of the elements 100 functions as the manager 200 in the system 10d. In the system 10d, the elements 100 mutually form a mesh network through Bluetooth (registered trademark). In such a configuration, even when communication with the server 300 and the UI device 400 (tablet) is temporarily disconnected in the system 10d, the elements 100 can autonomously perform a conjunction operation.

### (Fifth example)

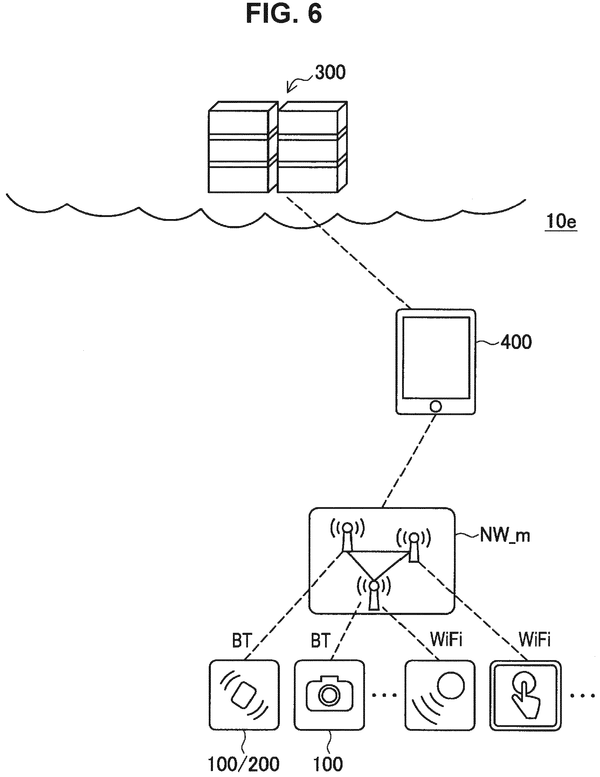

FIG. 6 is a diagram illustrating a fifth specific configuration example of the system illustrated in FIG. 1. Referring to FIG. 6, a system 10e includes elements 100 of which some function as a manager 200, a tablet functioning as a UI device 400, and a server 300. The system 10e is an example in which the manager 200 is incorporated into any of the elements 100 in the system 10c in the foregoing third example.

### (Sixth example)

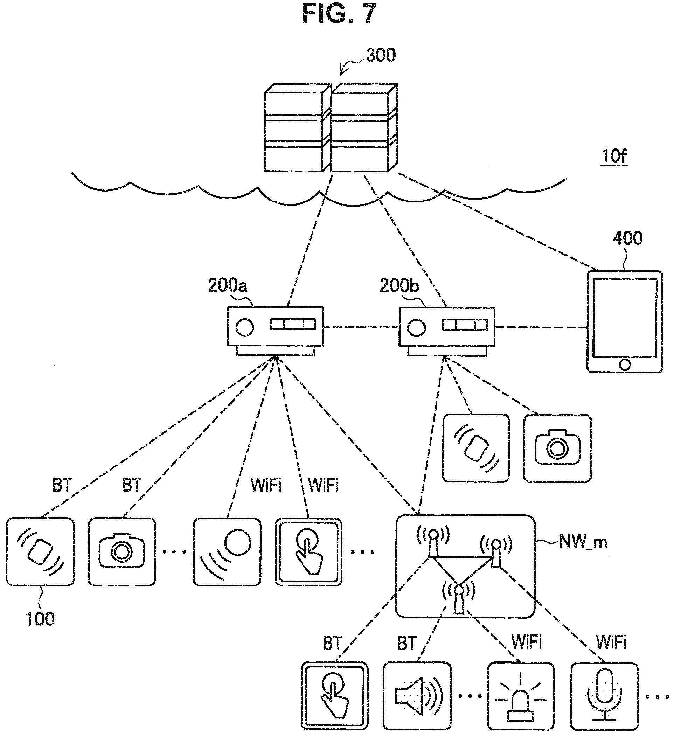

FIG. 7 is a diagram illustrating a sixth specific configuration example of the system illustrated in FIG. 1. Referring to FIG. 7, a system 10f includes elements 100, managers 200a and 200b, a tablet functioning as a UI device 400, and a server 300. The system 10f is an example in which the plurality of managers 200 are disposed in the system 10c in the foregoing third example. For example, each of the elements 100 can be connected to a manager of which a position is closer between the managers 200a and 200b. A connection state of the elements 100 and a program causing the elements 100 to perform a conjunction operation are synchronized as necessary or periodically between the plurality of managers 200a and 200b.

### (Seventh example)

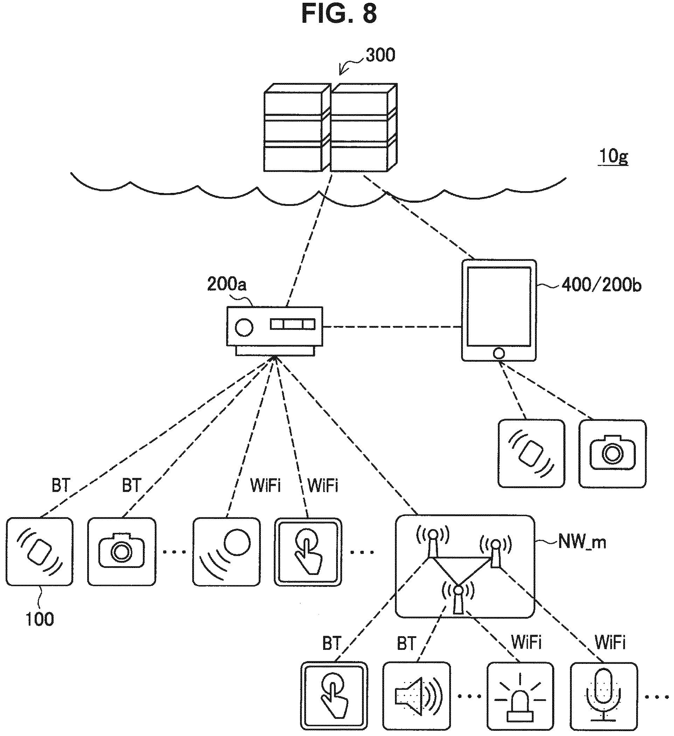

FIG. 8 is a diagram illustrating a seventh specific configuration example of the system illustrated in FIG. 1. Referring to FIG. 8, a system 10g includes elements 100, a manager 200a, a tablet functioning as a manager 200b and the UI device 400, and a server 300. The system 10g is an example in which the function of the manager 200b is integrated into the tablet in the system 10f in the foregoing sixth example. For example, each of the elements 100 can be connected to a manager of which a position is closer between the manager 200a and the tablet. A connection state of the elements 100 and a program causing the elements 100 to perform a conjunction operation are synchronized as necessary or periodically between the manager 200a and the tablet.

### (Eighth example)

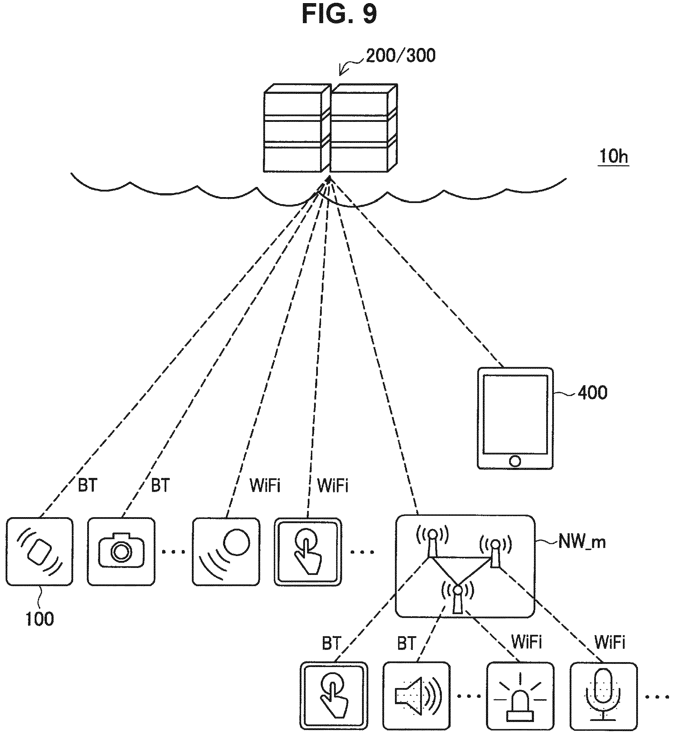

FIG. 9 is a diagram illustrating an eighth specific configuration example of the system illustrated in FIG. 1. Referring to FIG. 9, a system 10h includes elements 100, a tablet functioning as a UI device 400, and a server 300 functioning as a manager 200. The system 10h is an example in which the functions of the manager 200 are incorporated into the server 300 in the system 10b in the foregoing second example. For example, each of the elements 100 directly communicates with the server 300 via a mobile communication network or the like.

The several specific configuration examples of the system 10 illustrated in FIG. 1 have been described. Specific configuration examples of the system 10 are not limited to the above-described examples, but various modification examples which those skilled in the art will clearly understand based on these configuration examples can be included.

### (1-3. Examples of user interface)

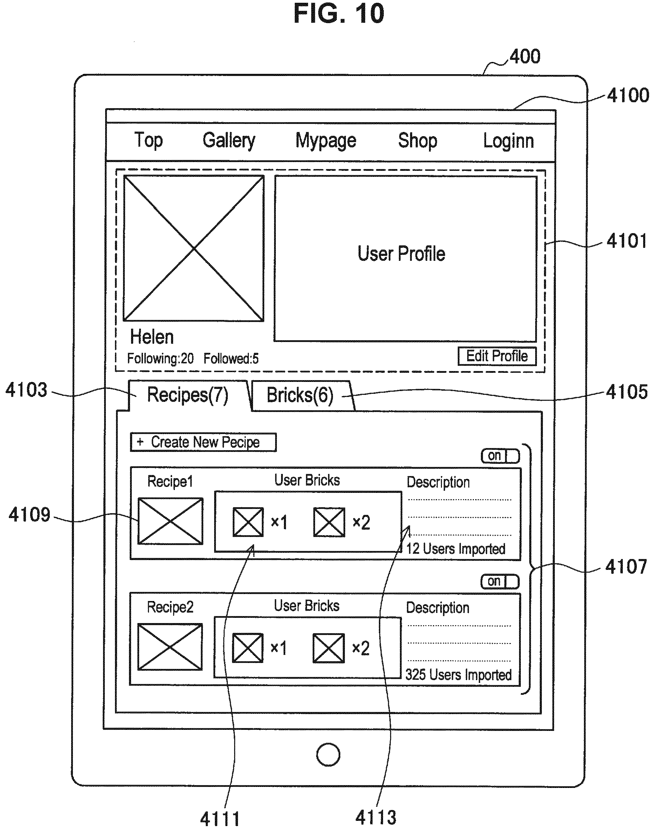

FIG. 10 is a diagram illustrating a first example of the UI provided in the system illustrated in FIG. 1. Referring to FIG. 10, a screen 4100 displayed on the display of a terminal device functioning as the UI device 400 includes a user profile 4101, a program list tab 4103, and an element list tab 4105. Since the program list tab 4103 is selected in the illustrated example, a program list 4107 is displayed. The program list 4107 includes program icons 4109, use element icons 4111, and descriptions 4113. For example, the screen 4100 can be displayed as a portal screen when the user uses a service provided by the system 10.

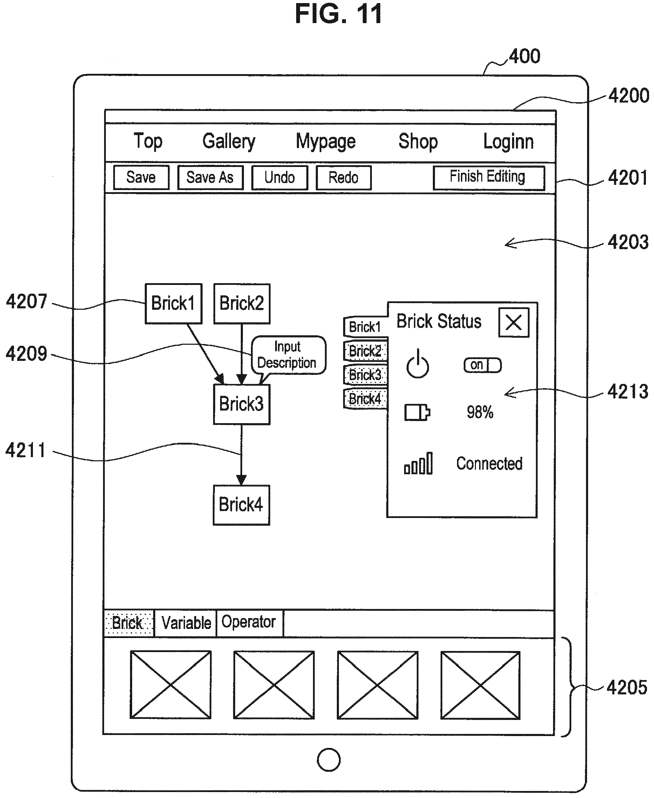

FIG. 11 is a diagram illustrating a second example of the UI provided in the system illustrated in FIG. 1. Referring to FIG. 11, a screen 4200 displayed on the display of the terminal device functioning as the UI device 400 includes a tool bar 4201, a canvas 4203, and a tray 4205. For example, the screen 4200 is used to edit a program causing the elements 100 in the system 10 to perform a conjunction operation. In the tool bar 4201, function buttons such as "save" and "redo" are disposed. In the canvas 4203, element icons 4207, a detailed information icon 4209, and links 4211 can be disposed or drawn. Referring to such icons and links, the elements 100 used for the conjunction operation, a process performed by each element 100, and a relation between the elements 100 can be set and checked. In the canvas 4203, an element property box 4213 is disposed, for example, to display the properties or states of the elements 100 disposed as the element icons 4207. In the tray 4205, the elements 100, software, or the like which can be embedded into a program by being disposed in the canvas 4203 are displayed as icons.

The UIs described with reference to FIGS. 10 and 11 are merely examples and UIs with various forms can be provided in the embodiment. For example, on the screen for editing of a program, as described with reference to FIG. 11, various UIs used on screens for visual programming is applicable.

### (1-4. Examples of conjunction operations)

Hereinafter, specific examples of a conjunction operation of the elements in the system illustrated in FIG. 1 will be further described. To facilitate understanding, the description will be made below with reference to a diagram visually expressing a program causing the elements 100 to perform a conjunction operation. Such a diagram is not necessarily associated with a UI (for example, a UI exemplified as the screen 4200 in FIG. 11) provided by the UI device 400. Software to be described below may be provided as an element (software element) similar to the element 100 (hardware element) or may be provided as a part of the function or operation of the element 100.

### (First specific example)

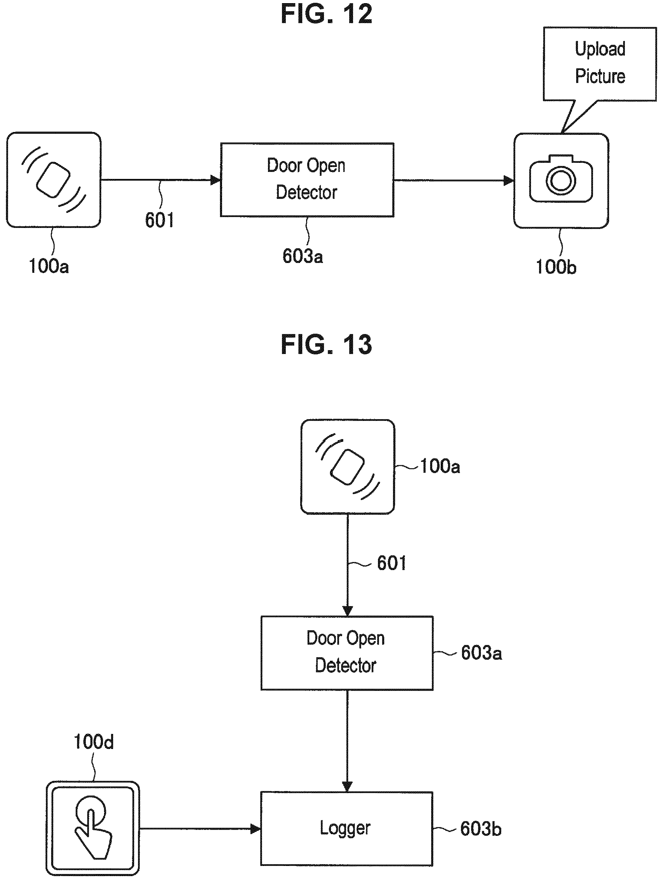

FIG. 12 is an explanatory diagram illustrating a first specific example of a conjunction operation of the elements in the system illustrated in FIG. 1. Referring to FIG. 12, in this example, the acceleration sensor 100a and the camera 100b are used among the elements 100. For example, the acceleration sensor 100a is mounted on a door of a refrigerator and the camera 100b is mounted at a position at which the inside of the refrigerator can be imaged. In the illustrated example, a link 601 oriented from the acceleration sensor 100a to the camera 100b indicates, "the camera 100b performs photographing based on a detected value of the acceleration sensor 100a." In the illustrated example, "uploading a captured image to the server" is specified as an operation of the camera 100b.

In the illustrated example, software 603a for detecting that the door is opened based on acceleration is used. The software 603a is executed by, for example, the arithmetic logical unit 221 of the manager 200 and detects that the door of the refrigerator is opened based on an analysis result of a value detected by the acceleration sensor 100a. By introducing the software 603a, the link 601 is a process in which "the camera 100b performs photographing when it is determined that the door of the refrigerator is opened based on the value detected by the acceleration sensor 100a"

Through the setting of such a program, in this example, an image photographed by the camera 100b when the door of the refrigerator is opened is uploaded to the server. The user can comprehend a change of the contents or a latest inventory state of the refrigerator by viewing the uploaded image.

Here, when opening of the door of the refrigerator is desired to be detected, a sensor dedicated for opening and closing detection using magnetism can also be used. In this example, however, by introducing the software 603a, it is possible to detect that the door is opened using the acceleration sensor 100a. Accordingly, in order to detect opening of the door of the refrigerator, for example, the acceleration sensor 100a used for another purpose until that time can be appropriated rather than using a dedicated sensor. When it is already unnecessary to detect that the door of the refrigerator is opened, the acceleration sensor 100a can be diverted to another purpose. Thus, in the embodiment, by changing a combination with software or other elements 100, the same elements 100 can be utilized for various purposes.

### (Second specific example)

FIG. 13 is an explanatory diagram illustrating a second specific example of a conjunction operation of the elements in the system illustrated in FIG. 1. Referring to FIG. 13, in this example, the acceleration sensor 100a and the button 100d are used among the elements 100. For example, the acceleration sensor 100a is mounted on the door of a bathroom and the button 100d is mounted on a lavatory. In the illustrated example, software 603a for detecting that the door is opened based on acceleration and software 603b for recording provided data are further used. The link 601 oriented from the acceleration sensor 100a to the software 603b via the software 603a indicates, "the software 603b records the fact that it is determined based on a value detected by the acceleration sensor 100a that the door is opened." The link 601 oriented from the button 100d to the software 603b indicates, "the software 603b records the fact that a signal is output from the button 100d."

In this example, by setting the program in this way, a time at which the user presses the button 100d in the lavatory and a time at which the door of the toilet is opened are recorded in a log. For example, when the user decides to press the button 100d to wash his or her face in the lavatory after getting up, a time at which the button 100d is pressed can be recorded as a time of getting up. For example, changes in the time of getting up every day and the time at which the user goes to the bathroom can be referred to chronologically, and thus such a log is helpful in improving a life rhythm of the user.

### (Third specific example)

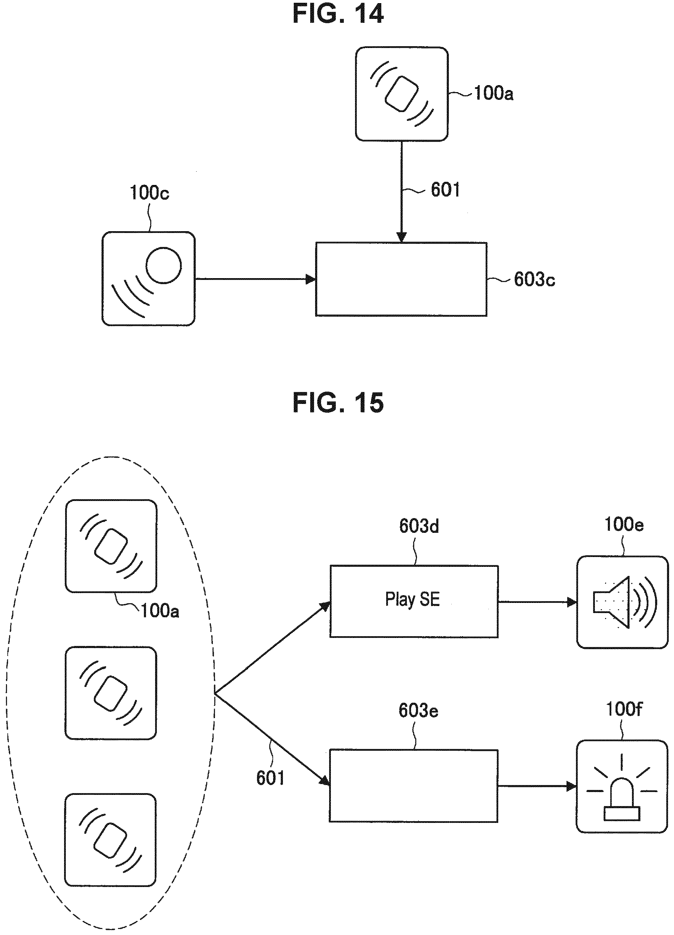

FIG. 14 is an explanatory diagram illustrating a third specific example of a conjunction operation of the elements in the system illustrated in FIG. 1. Referring to FIG. 14, in this example, the acceleration sensor 100a and the human detection sensor 100c are used among the elements 100. For example, the acceleration sensor 100a is mounted on a chair and the human detection sensor 100c is mounted on a desk in front of the chair. In the illustrated example, software 603c recording a time at which the user sits on the chair based on detection results of the acceleration sensor 100a and the human detection sensor 100c is further used. The link 601 oriented from the acceleration sensor 100a to the software 603c indicates, "a value detected by the acceleration sensor 100a is provided to the software 603c." The link 601 oriented from the human detection sensor 100c to the software 603c indicates, "a value detected by the human detection sensor 100c is provided to the software 603c."

In this example, by setting the program in this way, a time at which the user sits on the chair is recorded. The user can comprehend the time at which the he or she sits in his or her workplace based on the record and can take a break when a time for which he or she has continued to sit is too long. Alternatively, software outputting an alert from a smartphone based on the detection result of the software 603c may be further embedded. Then, when the user continues to sit for longer than a predetermined time, an alert may be output from the smartphone to urge the user to take a break.

### (Fourth specific example)

FIG. 15 is an explanatory diagram illustrating a fourth specific example of a conjunction operation of the elements in the system illustrated in FIG. 1. Referring to FIG. 15, in this example, the acceleration sensor 100a, the speaker 100e, and the LED lamp 100f are used among the elements 100. For example, the acceleration sensor 100a, the speaker 100e, and the LED lamp 100f are mounted on appropriate parts of the body of a user (for example, a child). The plurality of acceleration sensors 100a may be used. In the illustrated example, software 603d for reproducing a sound effect according to a pattern of acceleration and software 603e for flashing a lamp in a predetermined pattern similarly according to a pattern of acceleration are further shown. The pattern of acceleration handled by the software 603 may be a pattern of a single acceleration waveform or may be a combination pattern of a plurality of acceleration waveforms. The link 601 is set to be oriented from the acceleration sensor 100a to each of the software 603d and the software 603e. The link 601 indicates, "a value detected by the acceleration sensor 100a is provided to each of the software 603d and the software 603e." The link 601 is set from the software 603d to the speaker 100e and is set from the software 603e to the LED lamp 100f. The links 601 indicates, "the speaker 100e outputs audio according to an audio signal provided by the software 603d" and "the LED lamp 100d emits light according to a signal provided by the software 603e."

By setting the program in this way, in this example, a sound effect is output from the speaker 100e or light is emitted from the LED lamp 100f when the user (for example, a child) moves his or her hand or leg in a specific pattern. Thus, for example, when the child pretends to be a superhero, the child can have an exciting experience with the sound effect and the light.

### (Fifth specific example)

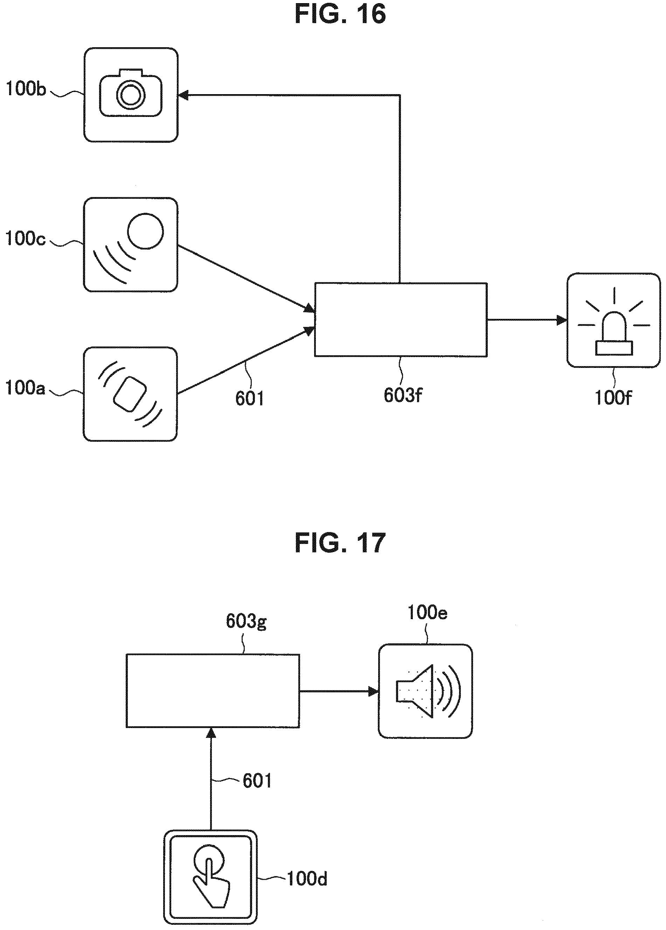

FIG. 16 is an explanatory diagram illustrating a fifth specific example of a conjunction operation of the elements in the system illustrated in FIG. 1. Referring to FIG. 16, in this example, the acceleration sensor 100a, the human detection sensor 100c, the camera 100b, and the LED lamp 100f are used among the elements 100. For example, the acceleration sensor 100a, the human detection sensor 100c, and the camera 100b are mounted on a bird table of a garden and the LED lamp 100f is mounted inside a house. In the illustrated example, software 603f for determining that a bird is sitting on the bird table based on detection results of the acceleration sensor 100a and the human detection sensor 100c is further shown. The link 601 is set to be oriented from each of the acceleration sensor 100a and the human detection sensor 100c to the software 603f. The link 601 from the acceleration sensor 100a indicates, "a value detected by the acceleration sensor 100a is provided to the software 603f." The link 601 from the human detection sensor 100c indicates, "a value detected by the human detection sensor 100c is provided to the software 603f." The link 601 is set to be oriented from the software 603f to each of the camera 100b and the LED lamp 100f. The link 601 to the camera 100b indicates, "the camera 100b performs photographing based on an output of the software 603f." The link to the LED lamp 100f indicates, "the LED lamp 100f is caused to emit light based on an output of the software 603f."

By setting the program in this way, in this example, when a bird sits on the bird table, a still image or a moving image is automatically photographed with the camera 100b, and thus a user can see what type of bird has come. When the bird sits on the bird table and the LED lamp 100f inside the house thus emits light, the user can come out to the garden to actually see the bird that has come.

### (Sixth specific example)

FIG. 17 is an explanatory diagram illustrating a sixth specific example of a conjunction operation of the elements in the system illustrated in FIG. 1. Referring to FIG. 17, in this example, the button 100d and the speaker 100e are used among the elements 100. For example, the speaker 100e is disposed in a bedroom and the button 100d is disposed in a lavatory. In the illustrated example, software 603g of an alarm clock is further shown. The link 601 is set from the software 603g to the speaker 100e. The link 601 indicates, "the speaker 100e outputs audio according to an audio signal output by the software 603 when a set time comes." The link 601 is set from the button 100d to the software 603g. The link 601 indicates, "An output of an audio signal by the software 603g stops when the button 100d is pressed."

By setting the program in this way, in this example, the sound of the alarm clock output from the speaker 100e disposed in the bedroom does not stop until the button 100d in the lavatory is pressed. Thus, since a situation in which the alarm stops despite the fact that the user is still asleep rarely occurs, the user can reliably wake up at a scheduled time.

### (2. Embodiments of present disclosure)

### (2-1. First embodiment)

### (Overview)

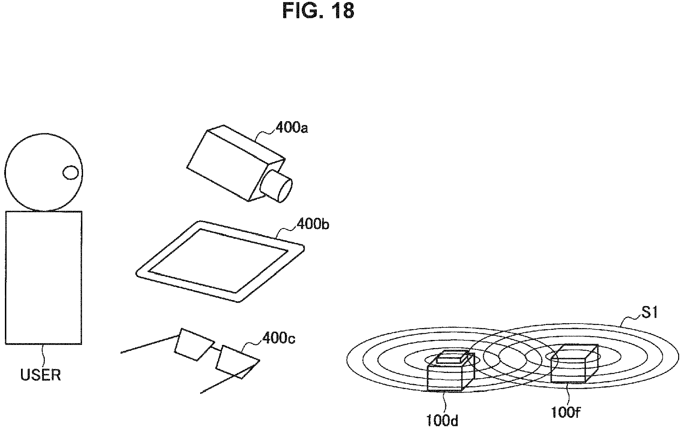

FIG. 18 is a schematic diagram illustrating an exemplary configuration according to the first embodiment of the present disclosure. FIG. 18 illustrates the button 100d and the LED lamp 100f as an example of one or more devices in the system 10. FIG. 18 also illustrates a camera-equipped projector 400a, a camera-equipped tablet 400b, and a camera-equipped smart glass 400c, as an example of the UI device 400.

In the illustrated example, the camera (not necessarily shown) provided in the projector 400a, the tablet 400b, or the smart glass 400c (also referred to generally as "UI device 400", hereinafter) allows an image including the button 100d and the LED lamp 100f to be acquired. However, it is difficult to specify information indicating an identity of the button 100d and the LED lamp 100f in the system 10 by only acquisition of the image. More specifically, it is difficult to specify information on how the manager 200, the server 200, and other elements 100 identify the button 100d and the LED lamp 100f, and to specify information on what kind of conjunction operation into which they are incorporated.

Thus, in the present embodiment, the button 100d and the LED lamp 100f output a wireless signal S1 using the Bluetooth (registered trademark) or the like as one example. The wireless signal S1 may be outputted in response to a request transmitted from the UI device 400 to the neighboring element 100, or may be outputted periodically regardless of a request. The wireless signal 1 includes a part obtained by encoding the ID (identification information) of the button 100d and the LED lamp 100fin the system 10. The UI device 400 can decode the received wireless signal S1, thereby specifying the ID of the button 100d and the LED lamp 100f in the system 10.

On the other hand, as the illustrated example, when a plurality of the elements 100 are placed at about the same distance from the UI device 400, it is difficult to identify the identity of the button 100d and the LED lamp 100f among the devices included in the image only by reception of the wireless signal S1. For the purpose of identification, the devices may be identified by providing a light emitting device for each of the button 100d and the LED lamp 100f and by allowing the light emitting device to emit a light emitting signal. As one example, the button 100d and the LED lamp 100f may output the light emitting signal in synchronization with the wireless signal S1. In this case, the button 100d and the LED lamp 100f output the light emitting signal in parallel with the output of the wireless signal S1. This makes it possible for the UI device 400 to specify a device that is outputting the light emitting signal in the image as the device that is outputting the wireless signal S1.

Alternatively, the button 100d and the LED lamp 100f may output the light emitting signal in place of the wireless signal S1. In this case, the light emitting signal includes a light emitting pattern obtained by encoding the ID of the button 100d and the LED lamp 100f in the system 10. The UI device 400 can readily associate the device, which is outputting the light emitting signal in the image, with the ID in the system specified by decoding the light emitting signal.

As another example, the identification of devices can be achieved by measuring the intensity of the wireless signal S1. As one example, there may be a difference between the distances from the UI device 400 to each of the button 100d and the LED lamp 100f as one example. In this case, it is possible to identify which one of the button 100d and the LED lamp 100f is closer to the UI device 400 by the use of a difference between the intensities of the wireless signal S1 from each device, which is received by the UI device 400. Alternatively, the UI device 400 may be capable of identifying the kind of devices of the button 100d and the LED lamp 100f by the use of image recognition. In this case, if the wireless signal S1 further includes a coded part obtained by coding each device by kind, the UI device 400 can associate the kind of the device indicated by the wireless signal S1 with the kind of the device identified using the image recognition, thereby identifying the button 100d and the LED lamp 100f included in the image.

Then, the UI device 400 transmits the ID of the button 100d and the LED lamp 100f in the system 10 to the manager 200 or the server 300 (not shown). The ID is specified by decoding the wireless signal S1 or the light emitting signal. The manager 200 or the server 300 provides setting information in the system 10 of the button 100d and the LED lamp 100f, based on the received ID. More specifically, the manager 200 or the server 300 provides information on a program for allowing the button 100d and the LED lamp 100f to operate in conjunction with each other, as one example.

In the present embodiment, the setting information is transmitted to the UI device 400. The UI device 400 associates the setting information with the button 100d and the LED lamp 100f, and presents it to the user. In this regard, as one example, the projector 400a, the tablet 400b, and the smart glass 400c illustrated in FIG. 18 present the setting information using their respective different ways.

As one example, the projector 400a projects an image indicating the setting information onto the real space near the button 100d and the LED lamp 100f. As one example, the tablet 400b causes a display to display a live view image including the button 100d and the LED lamp 100f in a reflective mode, and composes the image indicating the setting information in the vicinity of the button 100d and the LED lamp 100f in the live view image. As one example, the smart glass 400c causes a display of a glass portion to display the button 100d and the LED lamp 100f arranged in the real space in a transmissive mode, and causes the display to display the image indicating the setting information in a reflective mode so that the setting information is superimposed near the displayed portion.

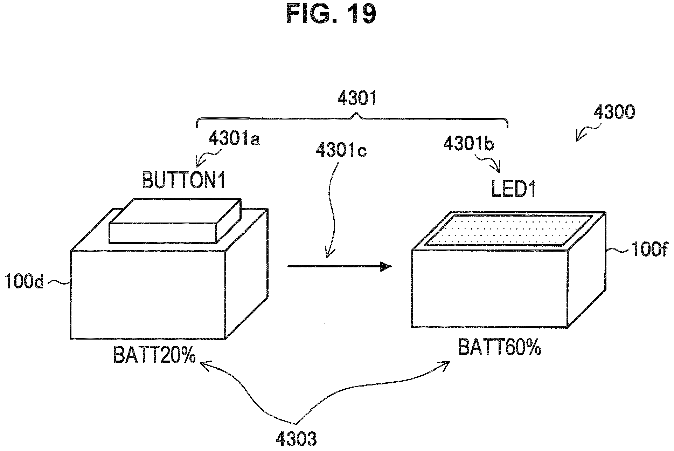

FIG. 19 is a diagram an example of display of the setting information in the example illustrated in FIG. 18. As one example, an image 4300 illustrated in FIG. 19 corresponds to a picture in the real space in which the projector 400a projects an image or a live view image displayed on a display of the tablet 400b in a reflective mode. The image 4300 may also correspond to an image displayed in a reflective mode to be superimposed with a picture in the real space displayed in a transmissive mode, which is visually recognized on a display of a glass portion of the smart glass 400c.

The image 4300 includes setting information 4301. As one example, the setting information 4301 includes information on the program for allowing the button 100d and the LED lamp 100f to operate in conjunction with each other in the system 10. In the illustrated example, texts 4301a (BUTTON1) and 4301b (LED1) indicating a role of each of the devices for the conjunction operation, and a link 4301c indicating a relationship between the devices are shown. As described above, such setting information 4301 is composed with the live view image, superimposed on a picture in the real space displayed in a transmissive mode, or projected onto the real space, as one example.

Moreover, in the illustrated example, a text 4303 indicating the remaining battery level of each of the devices is shown. The text 4303 is an example of state information of each of the devices. In the present embodiment, as with the ID (identification information), as one example, the state information of each of the devices, such as the remaining battery level, may be acquired by decoding the signal outputted from the button 100d and the LED lamp 100f. In this case, the signal outputted from the button 100d and the LED lamp 100f includes a first signal obtained by encoding the ID of each of the devices and a second signal obtained by encoding the state information of each of the devices. The first signal and the second signal may be included in the same type of signal (e.g., wireless signal S1 or light emitting signal), or may be included in different types of signal (e.g., one for the wireless signal 1 and the other for the light emitting signal). The UI device 400 (projector 400a, tablet 400b, or smart glass 400c) may transmits their individual state information as described above to the manager 200 or the server 300 as well as associate the state information with each of the devices for presentation.

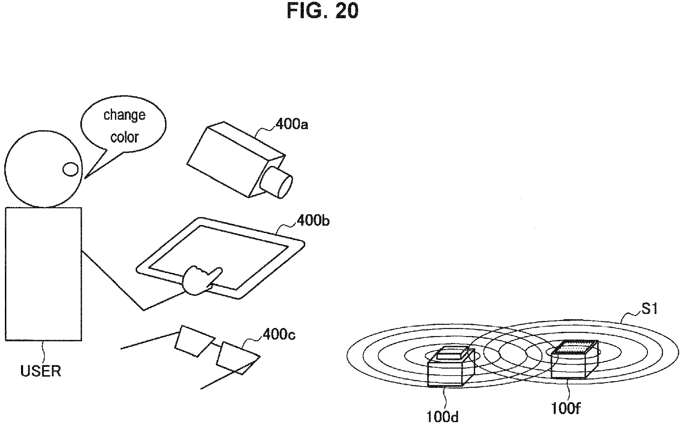

FIG. 20 is a diagram illustrating a state in which the user performs a setting change operation in the example illustrated in FIG. 18. In the illustrated example, the user of the projector 400a, the tablet 400b, or the smart glass 400c (also referred to generally as UI device 400, hereinafter) performs a setting change operation on the button 100d and the LED lamp 100f using the graphical user interface (GUI) provided by these devices.

For the projector 400a or the smart glass 400c, such an operation is recognized by acquiring, as a gesture, an operation in which the user points the button 100d and the LED lamp 100f presented in the real space or a similar operation on the setting information 4301 that is projected or superimposed, based on the image acquired by the camera. For the tablet 400b, the operation described above is recognized as the user's operation using a touch panel with respect to the button 100d and the LED lamp 100f, which are included in the live view image displayed on a screen, and the setting information 4301. Alternatively, as the user's operation, the user's speech, a result obtained by detecting the user's line of sight, or an operation on a separate operation device (e.g., laser pointer, etc.) may be recognized.

In the above example, the UI device 400 transmits operation information corresponding to the setting change operation by the user to the manager 200 or the server 300 (not shown), and the manager 200 or the server 300 changes the setting information in accordance with the received operation information. Furthermore, the manager 200 or the server 300 may notify the UI device 400 that the setting information is changed, and/or may notify the UI device 400 of the changed setting information.

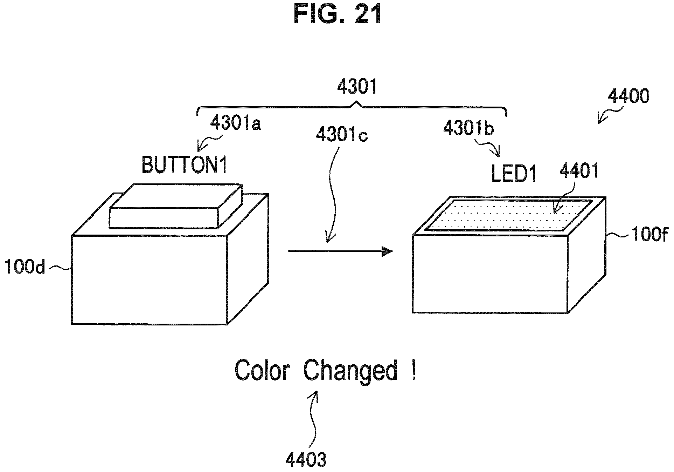

FIG. 21 is a diagram illustrating an example of display of a setting information change in the example illustrated in FIG. 20. An image 4400 illustrated in FIG. 21 is an image that is similar to the image 4300 described above with reference to FIG. 19, and includes setting information 4301. By using the setting information 4301, the illustrated example shows the conjunction operation in which the LED lamp 100f emits light by depression of the button 100d, and the color of light emitted from the LED lamp 100f through the setting change operation by the user is changed. The light emitting color is displayed by light emitting color display 4401 to be superimposed on the LED lamp 100f as one example, and the light emitting color may be changeable by the operation on the light emitting color display 4401. Furthermore, when the light emitting color is changed properly, a text 4403 indicating the change completion may be displayed in response to a notification from the manager 200 or the server 300.

Other various examples can be applied to the GUI used to change the setting information. As one example, a toolbox, a palette, or the like for changing the setting information may be displayed at a fixed position in the display. In this case, as one example, it may be possible to move the device itself, such as the tablet 400b and the smart glass 400c, to shift the viewpoint of the image, thereby changing the setting information by moving the element 100 in an image to the position of the toolbox or the palette. As one example, the element 100 in an image at a certain point in time can be fixed as a snapshot, and another element 100 can be arranged in the image, thereby using an actual image of the element 100 as a visual programming icon.

In the system 10 described above, the elements 100 may have a similar appearance to each other, an installation location of the elements 100 may be capable of being moved freely, or the same kind of a plurality of elements 100 may be included in the system 10. Thus, it is not easy to recognize the information of the element 100 registered in the manager 200 or the server 300 and the element 100 that is actually displayed in front of the user's eyes in association with each other. Therefore, in the present embodiment, a mechanism of the device recognition and setting information presentation as described above with reference to FIGS. 18 to 21 as one example is provided, which makes it easy for the user to associate each of the elements 100 with the setting information in the system 10. Furthermore, in the present embodiment, by allowing the user to perform an operation for changing the setting information of the element 100 through the UI provided in the terminal device, it is possible to perform more intuitively a setting operation including the conjunction operation between elements in the system 10.

### (Functional configuration of UI device)

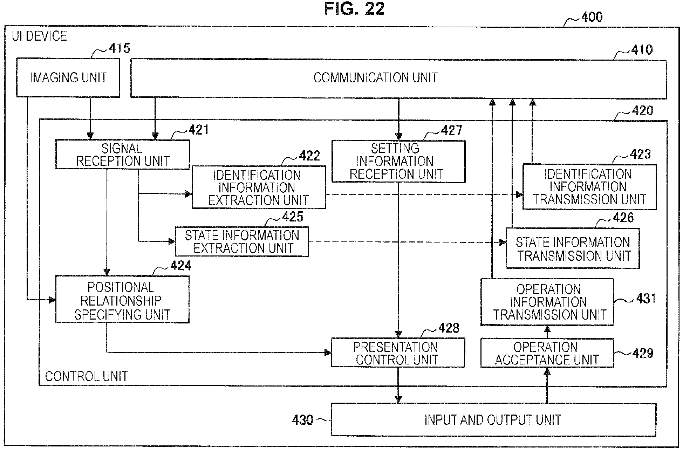

FIG. 22 is a block diagram illustrating an exemplary functional configuration of the UI device according to the first embodiment of the present disclosure. Referring to FIG. 22, the UI device 400 according to the present embodiment is configured to include an imaging unit 415, in addition to the communication unit 410, the control unit 420, and the input and output unit 430. Moreover, the control unit 420 is configured to include a signal reception unit 421, an identification information extraction unit 422, an identification information transmission unit 423, a positional relationship specifying unit 424, a state information extraction unit 425, a state information transmission unit 426, a setting information reception unit 427, a presentation control unit 428, an operation acceptance unit 429, and an operation information transmission unit 431.

As described with reference to FIG. 1 above, the communication unit 410 can include a communication device that communicates with the manager 200 and the server 300 via the network. The control unit 420 is implemented by, for example, a microcontroller or a CPU to control the input and output unit 430 and control exchange of information via the communication unit 410. The input and output unit 430 includes, for example, a display, a projector, a speaker, or a touch panel, presents various kinds of information to the user via the UI, and receives a manipulation input from the user.

The imaging unit 415 may be a camera module that includes an image sensor, an optical system, and a driving circuit for driving them, as one example. As with the example described above with reference to FIG. 18, the imaging unit 715 acquires an image including one or more devices (elements 100) in the system 10.

The signal reception unit 421 receives a signal outputted from one or more elements 100 in the system 10. As described above with reference to FIG 18, the signal reception unit 421 receives a wireless signal and/or a light emitting signal, as one example. The wireless signal among them is acquired from a Bluetooth (registered trademark) enabled communication device included in the communication unit 410. The light emitting signal is extracted from an image including the element 100, which is acquired by the imaging unit 415. Besides this, the signal reception unit 421 can receive various types of signals such as an infrared signal (acquired from the communication unit 410) and a two-dimensional code signal (extracted from the image). The term "output" herein is used to describe the transmission of a signal through various media such as radio and light, but this term is used interchangeably with the term "transmission", "emission", "display", or the like as appropriate depending on the medium that is being actually used. The term "reception of signal" herein is not necessarily mean only a receiving operation on the telecommunication, but can include an operation for extracting a light emitting signal from an image as described above.

As described above, the signal received by the signal reception unit 421 may include a first signal that is obtained by encoding the ID (identification information) of the element 100 in the system 10 and a second signal that is obtained by encoding the state information of the element 100. The first and second signals may be all transmitted through the same medium or may be transmitted through different media. Thus, the signal reception unit 421 is not necessarily limited to reception of a signal from any one of the communication unit 410 and the imaging unit 415 as one example, but may receive a signal from both. The signal reception unit 421 may receive a signal from a plurality of communication devices, which are included in the communication unit 410 to support different communication modes.

The identification information extraction unit 422 extracts, from the signal received by the signal reception unit 421, identification information of one or more elements 100 that output the signal in the system 10. More specifically, the identification information extraction unit 422 extracts the identification information by decoding the first signal received from one or more elements 100. The identification information is a unique ID in the system 10 assigned by the manager 200 as one example, and is used to perform communication by each of the elements 100 or to define the conjunction operation of the element 100.

The identification information transmission unit 423 transmits the identification information extracted by the identification information extraction unit 422 to a server through the communication unit 410. In this description, the server indicates a device for providing setting information of the element 100 in the system 10 provided with the identification information (ID), and is not necessarily limited to the server 300. In other words, with respect to the function according to the present embodiment, the manager 200 may serve as the server.

The positional relationship specifying unit 424 specifies the positional relationship between the UI device 400 and the element 100 based on the signal received by the signal reception unit 421. As one example, when the signal reception unit 421 receives a wireless signal using the Bluetooth (registered trademark) or the like, the positional relationship specifying unit 424 can specify whether the element 100 is close to the UI device 400 within a certain range on the assumption that it can perform direct wireless communication with the element 100. Furthermore, the positional relationship specifying unit 424 may specify the distance between the element 100 and the UI device based on the intensity of the wireless signal.

Alternatively, when the signal reception unit 421 extracts a light emitting signal from the image acquired by the imaging unit 415, the positional relationship specifying unit 424 may specify the distance or orientation relationship between the UI device 400 and the element 100 based on the position or size of the light emitting signal in the image. In addition to this, as one example, when information on the original appearance or size of the element 100 is available, the positional relationship specifying unit 424 can specify the distance or orientation relationship between the UI device 400 and the element 100 based on the deformation of a picture of the element 100 in the image.

The state information extraction unit 425 extracts state information of the element 100 that outputs the signal from the signal received by the signal reception unit 421. More specifically, the state information extraction unit 425 acquires the state information by decoding the second signal received from one or more elements 100. The state information may be an ever-changing state in the element 100, for example, a power supply state or a communication state.

The state information transmission unit 426 transmits the state information extracted by the state information extraction unit 425 to a server through the communication unit 410. In this description, the server indicates a device for managing state information of the element 100 in the system 10 provided with the identification information (ID), and is not necessarily limited to the server 300. The server that receives the state information updates the state information of the element 100, which is held in the server, as necessary.

Each of the elements 100 may be capable of reporting the state information to the manager 200 autonomously. However, in the present embodiment, as one example, when there is a request from the UI device 400, the element 100 provides the state information for the UI device 400 using the signal, and the UI device 400 transmits the state information to a server such as the manager 200, thereby making it possible to reduce the power consumption of the element 100.

The setting information reception unit 427 receives setting information of the element 100, which is specified based on the identification information, through the communication unit 410 from a server (e.g., the manager 200) to which the identification information transmission unit 423 transmits the identification information (ID) of the element 100. As described above, the setting information may include information indicating a program for allowing the element 100 to operate in conjunction with another element 100 and/or various types of software in the system 10, as one example.

The presentation control unit 428 presents the setting information of the element 100 received by the setting information reception unit 427 in association with the element 100. More specifically, as one example, the presentation control unit 428 causes the setting information to be displayed on a screen of a display included in the input and output unit 430 in association with the element 100. In this description, the element 100 may display it on a display as an image in a reflective mode (for the tablet 400b in the above example of FIG. 18), or may display it on a display in a transmissive mode (for the smart glass 400c in the above example of FIG. 18). In this case, the presentation control unit 428 composes or superimposes an image indicating the setting information near the element 100 as one example. Alternatively, the presentation control unit 428 controls the projector included in the input and output unit 430 so that the image indicating the setting information may be projected in the space where the element 100 exists in association with the element 100 (for the projector 400a in the example of FIG. 18). The presentation control unit 428 presents the setting information in association with the element 100, and thus the positional relationship between the UI device 400 and the element 100 specified by the positional relationship specifying unit 424 is used.

In the present embodiment, the identification information transmission unit 423, the setting information reception unit 427, and the presentation control unit 428 constitute means for presenting the setting information of the element 100 in the system 10 in association with the element 100, based on the identification information of the element 100 and the positional relationship between the UI device 400 and the element 100.

The operation acceptance unit 429 accepts a setting change operation performed by the user on the element 100 through the input device included in the input and output unit 430. As one example, as with the example of the tablet 400b, the setting change operation by the user on the element 100 may be accepted using a touch panel or the like through the graphical user interface (GUI) provided in the display included in the input and output unit 430.

The setting change operation may be recognized from the user's gesture on the element 100, which is extracted from the image acquired by a camera (may be the same as the imaging unit 415) included in the input and output unit 430. Examples of gestures to be recognized include a gesture conducted by the user's hand and a gesture conducted by the user through another device, for example, a gesture for pointing the element 100 or its vicinity by using a laser pointer. Alternatively, the setting change operation may be recognized from the user's speech extracted from a voice acquired by a microphone included in the input and output unit 430 or a result obtained by detecting the user's line of sight. The use of such a natural user interface (NUI) makes the user's setting change operation easy in the example of the projector 400a or the smart glass 400c as one example.

The operation information transmission unit 431 transmits operation information corresponding to the setting change operation accepted by the operation acceptance unit 429 to a server through the communication unit 410. In this description, the server indicates a device for managing state information of the element 100 in the system 10 provided with the identification information (ID), and is not necessarily limited to the server 300. The server that receives the state information updates the information on the element 100, which is held in the server, as necessary.

### (Functional configuration of element)

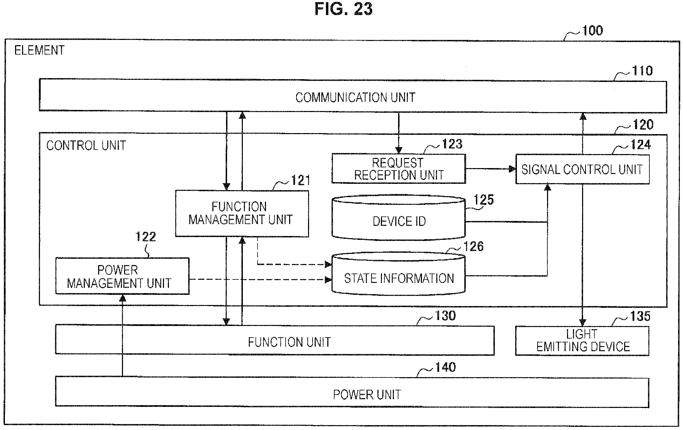

FIG. 23 is a block diagram illustrating an exemplary functional configuration of the element according to the first embodiment of the present disclosure. Referring to FIG. 23, the element according to the present embodiment is configured to include a light emitting device 135, in addition to the communication unit 110, the control unit 120, the function unit 130, and the power unit 140. Moreover, the control unit 120 is configured to include a function management unit 121, a power management unit 122, a request reception unit 123, and a signal control unit 124. A device ID 125 and state information 126 can be stored in a memory.

As described with reference to FIG. 1 above, the communication unit 110 may include a communication device that communicates with the manager 200 and/or another element 100 via the network. The control unit 120 is implemented by, for example, a microcontroller or a CPU and controls the function unit 130. The function unit 130 includes, for example, a sensor or an actuator and implements a unique function of each element 100. The power unit 140 includes a battery or a power plug and supplies power to operate the communication unit 110, the control unit 120, and the function unit 130.

The light emitting device 135 emits a light emitting signal used to transfer the device ID 125 or the like toward the UI device 400. The light emitting device 135 may be a LED or other various types of devices. When the signal outputted from the element 100 does not include a light emitting signal, the light emitting device 135 is not necessarily provided. As one example, as with the LED lamp 100f in the above example, the light emitting device 135 may be associated with the function of the element 100.

The function management unit 121 controls the function unit 130. As one example, the function management unit 121 controls the function unit 130 so that the function unit 130 operates in accordance with information received from the manager 200 or other elements 100 through the communication unit 110. As one example, the function management unit 121 transmits information obtained by the operation of the function unit 130 to the manager 200 or other elements 100 through the communication unit 110. Furthermore, the function management unit 121 updates the state information 126 when there is a change in the communication state by the communication unit 110 or a change in the communication state by the function unit 130, as one example.

The power management unit 122 controls the power unit 140. As one example, the power management unit 122 acquires information on the remaining battery level from the power unit 140 and records this information as the state information 126.

The request reception unit 123 receives a request for a signal including the identification information (ID) from the UI device 400 through the communication unit 110. The request reception unit 123, when receiving the request, requests the signal control unit 124 to output a signal such as a wireless signal or a light emitting signal. When the element 100 is set to output a signal periodically regardless of the existence of request, the request reception unit 123 is not necessarily provided.

The signal control unit 124 controls the output of the signal by the communication unit 110 and/or the light emitting device 135. More specifically, the signal control unit 124 controls the communication unit 110 and/or the light emitting device 135 so that the communication unit 110 and/or the light emitting device 135 outputs a signal, such as a wireless signal or a light emitting signal, when the request reception unit 123 receives the request or periodically regardless of the existence of request. In this case, the signal control unit 124 refers to the device ID 125 or the state information 126 and encodes such information, thereby generating a signal.

The device ID 125 is an ID of the element 100 assigned in the system 10. The ID is unique at least within the system 10, and is used to perform communication by each of the elements 100 or to define the conjunction operation of the element 100, as one example. The state information 126 is the information indicating the state of the element 100, which is generated and updated by the functions of the function management unit 121 and the power management unit 122 as described above.

### (Processing sequence)

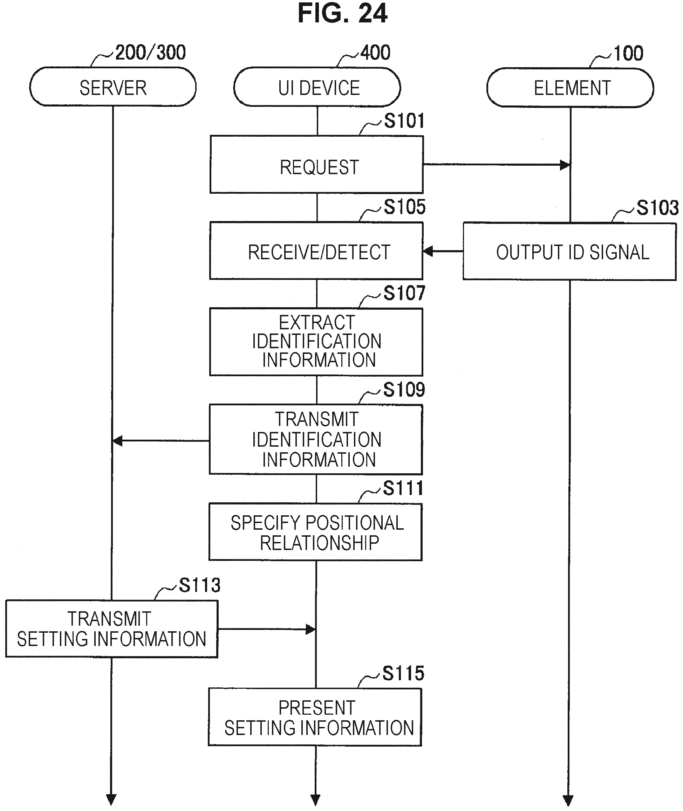

FIG. 24 is a sequence diagram illustrating a first procedure of the process in the first embodiment of the present disclosure. FIG. 24 illustrates the process from the transmission of a request for a signal from the UI device 400 to the element 100 to the presentation of the setting information of the element 100 by the UI device 400.

In the illustrated example, the UI device 400 transmits a request to the element 100 (S101). The request may be transmitted using wireless communication such as Bluetooth (registered trademark) as one example, and may be broadcast to all the elements 100 located near the UI device 400. The element 100, when receiving the request, outputs a signal including the identification information (ID) (S103). More specifically, the element 100 transmits the wireless signal through the communication 110 or emits light, which is composed of a light emitting signal, through the light emitting device 135. As described above, the element 100 may output a signal periodically regardless of the existence of request. In this case, the process of S101 is not necessarily performed.

In response to this, the UI device 400 receives or detects the signal outputted from the element 100 (S105). More specifically, as one example, the UI device 400 receives the wireless signal through the communication 410. The UI device 400 may detect the light emitting signal by analyzing the image acquired by the imaging unit 415. Furthermore, the UI device 400 extracts the identification information of the element 100 from the received or detected signal (S107).

Then, the UI device 400 transmits the extracted identification information of the element 100 to the server 200 or 300 (S109). As described above, the destination to which the identification information is transmitted may be a server that holds the setting information of the element 100, and more specifically, the destination may be the manager 200 or the server 300.

Subsequent to or in parallel with steps S107 and S109, the UI device 400 specifies the positional relationship between the UI device 400 and the element 100 based on the received or detected signal (S111). In this case, the UI device 400 may specify the positional relationship with the element based on the analysis of an image or the measurement of the intensity of the wireless signal, as one example. Examples of the positional relationship include whether the element 100 is close to the UI device 400, distance between the element 100 and the UI device 400, and/or orientation relationship between the element 100 and the UI device 400.

On the other hand, the server 200/300, when receiving the identification information of the element 100 transmitted in S109, detects the setting information of each of the elements 100 stored in the storage unit 230 or 330 based on the identification information and extracts the setting information of the target element 100. Furthermore, the server 200 or 300 transmits the setting information to the UI device 400 through the communication unit 210 or 310 (S113). The UI device 400 presents the setting information of the element 100 transmitted from the server 200 or 300, based on the positional relationship between the UI device 400 and the element 100, which is specified in S111 (S115).

The process described above allows the presentation of the setting information of the element 100 as described with reference to FIGS. 19 and 21 in the above as one example to be achieved.

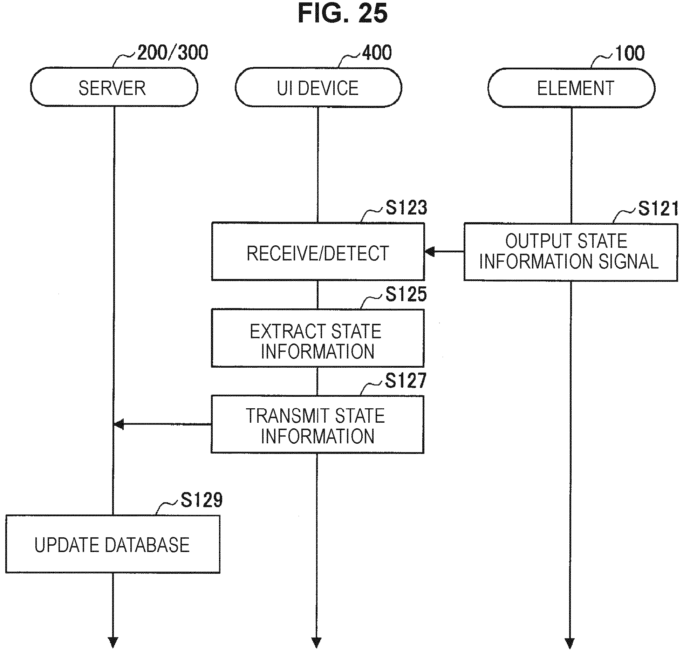

FIG. 25 is a sequence diagram illustrating a second procedure of the process in the first embodiment of the present disclosure. In FIG. 25, subsequent to the first procedure illustrated in FIG. 24, there is illustrated a process from the output of the signal including the state information of the element 100 to the update of a database by the server 200 or 300 based on the state information.

In the illustrated example, the element 100 outputs a signal including the state information (S121). In this example, the signal may include the identification information of the element 100 in addition to the state information. On the other hand, the UI device 400 receives or detects the signal outputted from the element 100 (S123). More specifically, as one example, the UI device 400 receives a wireless signal through the communication unit 410. The UI device 400 may detect a light emitting signal by analyzing the image acquired by the imaging unit 415. Furthermore, the UI device 400 extracts the state information of the element 100 from the received or detected signal (S125).

Subsequently, the UI device 400 transmits the extracted state information of the element 100 to the server 200 or 300 (S127). The server 200 or 300 updates a database of the element 100 stored in the storage unit 230 or 330, based on the identification information of the element 100, which is received previously (e.g., by the process as illustrated in FIG. 24) or is received along with the state information in S127 (S129).

The process described above allows the state information notified by the element 100 to the UI device 400 using a wireless signal or a light emitting signal of the element 100 to be reflected in the database of the server 200 or 300.

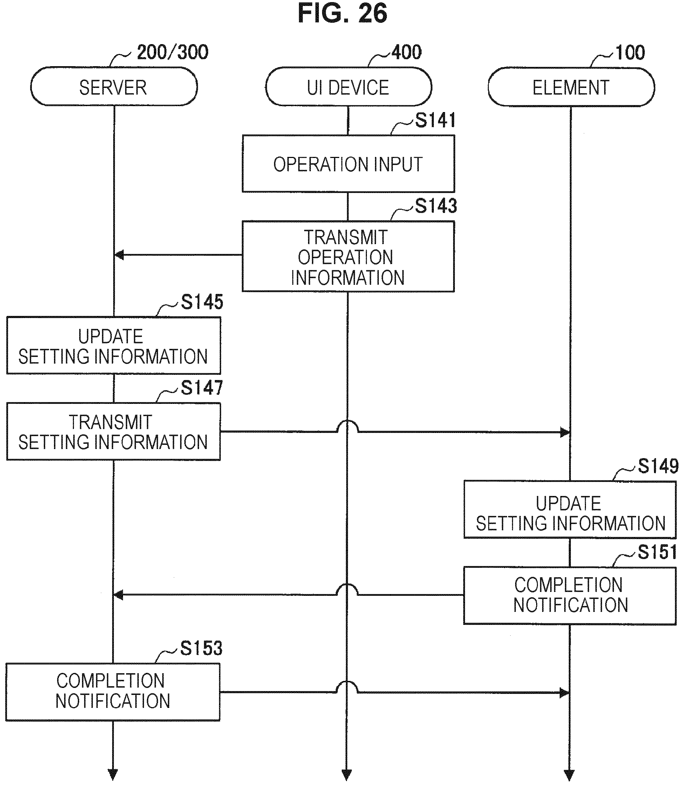

FIG. 26 is a sequence diagram illustrating a third procedure of the process in the first embodiment of the present disclosure. In FIG. 26, subsequent to the first procedure illustrated in FIG. 24 or the second procedure illustrated in FIG. 25, there is illustrated a process from the acquisition of the setting change operation of the element 100 in the UI device 400 to the update of the setting information of the element 100 in response to the operation.

In the illustrated example, the UI device 400 accepts the operation input of the setting change by the user (S141). As described above, the operation input is acquired based on an input device such as a touch panel included in the input and output unit 430 of the UI device 400, the user's gesture or speech, a result obtained by detecting the user's line of sight, or the like. The UI device 400 transmits operation information corresponding to the setting change to the server 200 or 300 (S143). In the server 200 or 300 receiving the operation information, the control unit 220 or 320 updates the setting information of the element 100 stored in the storage unit 230 or 330 based on the operation information (S145).

Furthermore, the server 200 or 300 transmits the updated setting information to the element 100 (S147). As described with reference to FIGS. 1 to 9 as one example, each of the elements 100 is capable of communicating with the server 200 or 300. Although, in the illustrated example, the server 200 or 300 and the element 100 communicate with each other without intervention of the UI device 400, the server 200 or 300 and the element 100 may communicate with each other through the UI device 400.

Then, in the element 100 receiving the updated setting information, the control unit 120 updates the setting information stored therein (S149). When the update is completed, the element 100 may transmit a notification upon completion to the server 200 or 300 (S151). Furthermore, the server 200 or 300 may transmit a notification upon completion of the update to the UI device 400 (S153). This allows display that indicates completion of change such as the text 4403 illustrated in FIG. 21 as one example to be provided in the UI device 400.

### (Modified example)

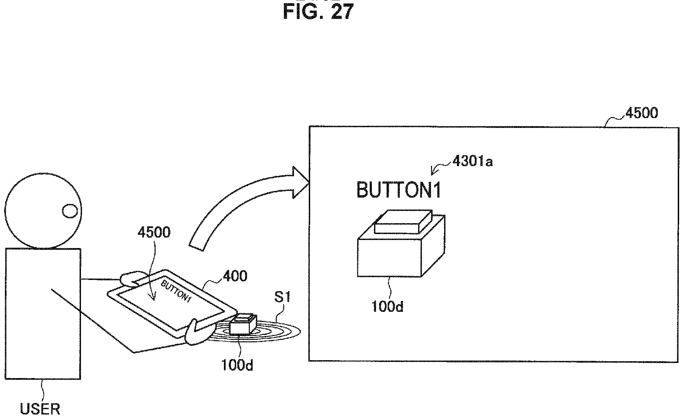

FIG. 27 is a diagram illustrated to describe a modified example of the first embodiment of the present disclosure. FIG. 27 illustrates the button 100d as an example of one or more devices in the system 10 and the camera-equipped tablet 400b as an example of the UI device 400.

The example of FIG. 27 is different from the above example of FIG. 18 in that, as the element 100, only the button 100d exists near the UI device 400. In such a case, the UI device 400 may be necessary only to specify that the button 100d be close to the UI device 400 as the positional relationship between the UI device 400 and the button 100d. The element 100 included in an image 4500 acquired by a camera of the tablet 400b can be recognized as the button 100d without acquisition of information for identifying the element 100 on the image.

In such a case, the button 100d may transmit only a wireless signal S1 including the identification information (ID), but does not necessarily emit the light emitting signal. The UI device 400 does not necessarily specify the button 100d by reception of the light emitting signal or the image analysis. Although the tablet 400b is illustrated in the above example, this is similarly applied to the projector 400a, the smart glass 400c, or the like.

The first embodiment of the present disclosure has been described. In the present embodiment, the UI device 400 that receives the signal outputted from the element 100 can perform its own presentation of the setting information in association with the element 100. This makes it possible to easily refer to the setting information of each of the elements 100, as one example, by moving the UI device 400 close to the elements 100 arranged in various locations. As an example of the UI device 400, the projector 400a, the tablet 400b, and the smart glass 400c are illustrated, but examples of the UI device 400 according to the present embodiment are not limited to the above devices. The UI device 400 may be any device as long as it includes an imaging unit for acquiring an image including the element 100, a communication unit for communicating with the element 100 and the server 200 or 300, and a presentation unit for presenting setting information of the element 100.

Although the UI device 400 acquires the setting information from the server 200 or 300 in the example described above, in another example, the information may be presented locally by the UI device 400 without intervention of the server 200 or 300. As one example, when the setting information of the element 100 is held in the UI device 400 at least temporarily, the UI device 400 may acquire the setting information internally and may present it.

### (2-2. Second embodiment)

A second embodiment of the present disclosure will be described. In the present embodiment, portions that are not otherwise described can have a similar configuration to the first embodiment.

### (Overview)

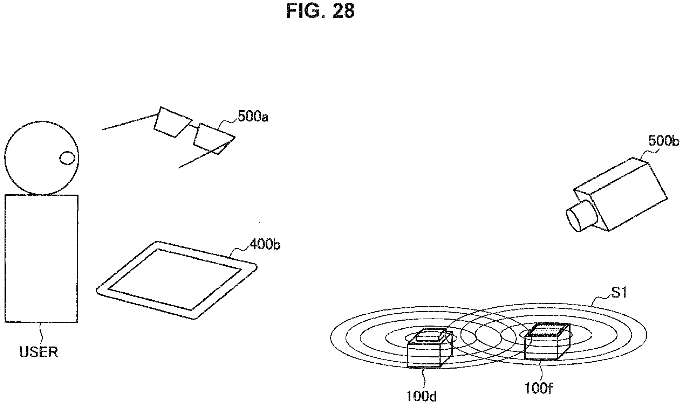

FIG. 28 is a schematic diagram illustrating an exemplary configuration of the second embodiment of the present disclosure. FIG. 28 illustrates the button 100d and the LED lamp 100f as an example of one or more devices (the element 100) in the system 10, the camera-equipped tablet 400b as an example of the UI device 400, and a camera-equipped smart glass 500a and a camera-equipped projector 500b as an example of a presentation device 500.

In the illustrated example, a camera (not shown) that is provided in the tablet 400b (referred to generally as "UI device 400" hereinafter) allows an image including the button 100d and the LED lamp 100f (referred to generally as "element 100" hereinafter) to be acquired. Furthermore, in the present embodiment, the element 100 outputs the wireless signal S1 using Bluetooth (registered trademark) as one example, which is similar to the first embodiment. The UI device 400 is capable of specifying an ID of the element 100 in the system 10 by decoding the received wireless signal S1. The UI device 400 transmits the specified ID to the manager 200 or the server 300.

In the present embodiment, the UI device 400 also specifies the positional relationship between the UI device 400 and the element 100 based on the signal received from the element 100. More specifically, as one example, the UI device 400 is capable of specifying the position of the element 100, which emits the light emitting signal, in the image based on the light emitting signal extracted from the image. The UI device 400 is capable of specifying the distance between the UI device 400 and the element 100 based on the intensity of the received wireless signal S1.

In the present embodiment, the setting information specified based on the ID of the element 100 is provided for the presentation device 500 rather than the UI device 400 from the manager 200 or the server 300, and it is presented by the presentation device 500 in association with the element 100, which is different from the first embodiment. Thus, the UI device 400 transmits information indicating the positional relationship between the UI device 400 and the element 100 along with the ID of the element 100 to the manager 200 or the server 300. The manager 200 or the server 300 transmits the setting information extracted from the database of the storage unit 230 or 330 based on the received ID and the information indicating the positional relationship between the UI device 400 and the element 100 to the presentation device 500. The presentation device 500 converts the information indicating the positional relationship between the UI device 400 and the element 100 into information indicating the positional relationship between the presentation device 500 and the element 100, and then presents the setting information in association with the element 100.

In the illustrated example, as one example, the relative positional relationship between the tablet 400b and the button 100d and LED lamp 100f is converted into the positional relationship between the smart glass 500a and the button 100d and LED lamp 100f or the positional relationship between the projector 500b and the button 100d and LED lamp 100f. The conversion of the positional relationship can be achieved by matching between images acquired by the tablet 400b and the smart glass 500a or the projector 500b using their respective cameras and by estimating the positional relationship between viewpoints of the images. As one example, the smart glass 500a displays the setting information in a reflective mode near the button 100d and the LED lamp 100f, which are displayed on a display of the glass portion in a transmissive mode, based on the converted positional relationship. The projector 500b projects the setting information near the button 100d and the LED lamp 100f onto the real space based on the converted positional relationship.

### (Functional configuration)

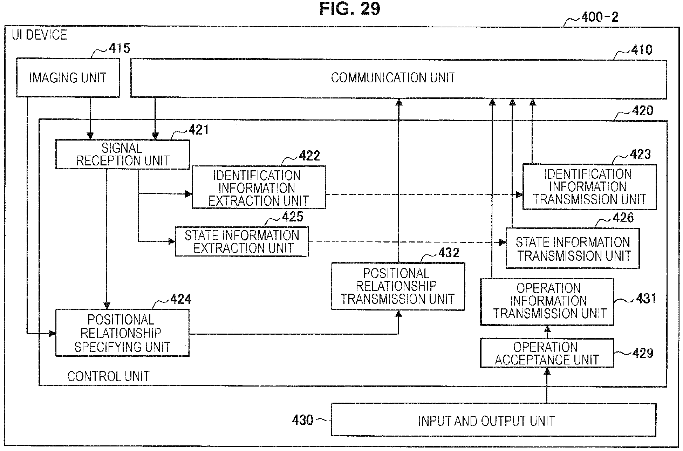

FIG. 29 is a block diagram illustrating an exemplary function configuration of the UI device according to the second embodiment of the present disclosure. Referring to FIG. 29, an UI device 400-2 is configured to include the imaging unit 415, in addition to the communication unit 410, the control unit 420, and the input and output unit 430. The control unit 420 does not include the setting information reception unit 427 and the presentation control unit 428, which is different from the UI device 400 according to the first embodiment. Alternatively, the control unit 420 is configured to include a positional relationship transmission unit 432.

The positional relationship transmission unit 432 transmits information indicating the positional relationship between the UI device 400 and the element 100, which is specified by the positional relationship specifying unit 424, to a server through the communication unit 410. In this description, the server indicates a device for managing the state information of the element 100 in the system 10 provided with the identification information (ID), and is not necessarily limited to the server 300.

In the present embodiment, the identification information transmission unit 423 and the positional relationship transmission unit 432 constitute means for presenting the setting information of the element 100 in the system 10 in association with the element 100, based on the identification information of the element 100 and the positional relationship between the UI device 400 and the element 100. In the present embodiment, the presentation of the setting information is performed by the presentation device 500.

### (Functional configuration of presentation device)

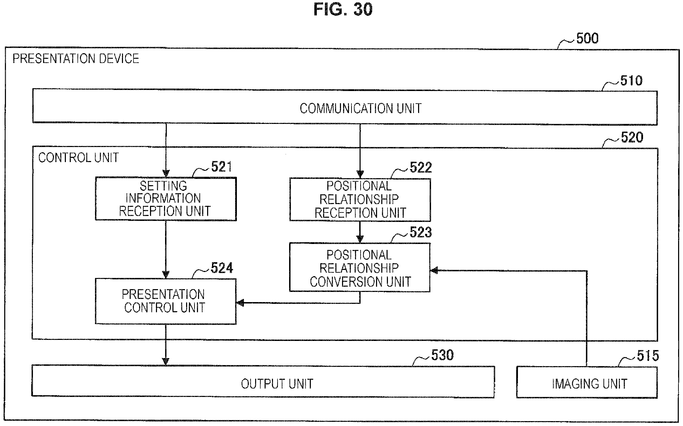

FIG. 30 is a block diagram illustrating an exemplary functional configuration of the presentation device according to the second embodiment of the present disclosure. Referring to FIG. 30, the presentation device 500 according to the present embodiment is configured to include an imaging unit 515, in addition to a communication unit 510, a control unit 520, and an output unit 530. The control unit 520 is configured to include a setting information reception unit 521, a positional relationship reception unit 522, a positional relationship conversion unit 523, and a presentation control unit 524.

The presentation device 500 may be a device having a functional configuration capable of being used as the UI device 400, as illustrated in the example of FIG. 28. More specifically, the communication unit 510 may include a communication device that communicates with the manager 200 and the server 300 over a network. The control unit 520 is implemented by a microcontroller or a CPU as one example, and controls the output unit 530. The control unit 520 controls the exchange of information through the communication unit 510. The output unit 530 includes a display, a projector, a speaker, or the like, as one example, and presents various types of information to the user through the UI.

The setting information reception unit 521 receives the setting information of the element 100 specified based on the identification information (ID) of the element 100 through the communication unit 510 from a server that acquires the identification information of the element 100 from the identification information transmission unit 423 of the UI device 400. As described above, the setting information may include information on a program used to cause the element 100 in the system 10 to operate in conjunction with another element 100 and/or various types of software.

The positional relationship reception unit 522 receives the information indicating the positional relationship between the UI device 400 and the element 100, which is specified by the positional relationship specifying unit 424 of the UI device 400, from a server through the communication unit 510.

The positional relationship conversion unit 523 converts the information indicating the positional relationship between the UI device 400 and the element 100, which is received by the positional relationship reception unit 522, into information indicating the positional relationship between the presentation device 500 and the element 100. In this case, the positional relationship conversion unit 523 may perform the conversion of the positional relationship using an image including the target element 100 (may be an image including a common subject in different viewpoints than the image obtained in the UI device 400), which is acquired by the imaging unit 515.

More specifically, as one example, the positional relationship conversion unit 523 may acquire separately the image acquired using the imaging unit 415 by the UI device 400 (may be directly acquired from the UI device 400 or may be acquired via a server) and may estimates the positional relationship between viewpoints of the images by performing the matching based on a subject between the image acquired using the imaging unit 415 and the image acquired by the imaging unit 515, and may convert the positional relationship between the UI device 400 and the element 100 into the positional relationship between the present device 500 and the element 100 based on the positional relationship of viewpoints. The positional relationship can be converted using not only the techniques illustrated in the above but also various types of techniques used for the matching or the like of images captured from different viewpoints.

The presentation control unit 524 presents the setting information of the element 100 received by the setting information reception unit 521 in association with the element 100. More specifically, as one example, the presentation control unit 524 causes the setting information in association with the element 100 to be displayed in a screen of a display included in the output unit 530. Specific method of display of the elements 100 and the setting information may be similar to the method described in the first embodiment described above.

### (Processing sequence)

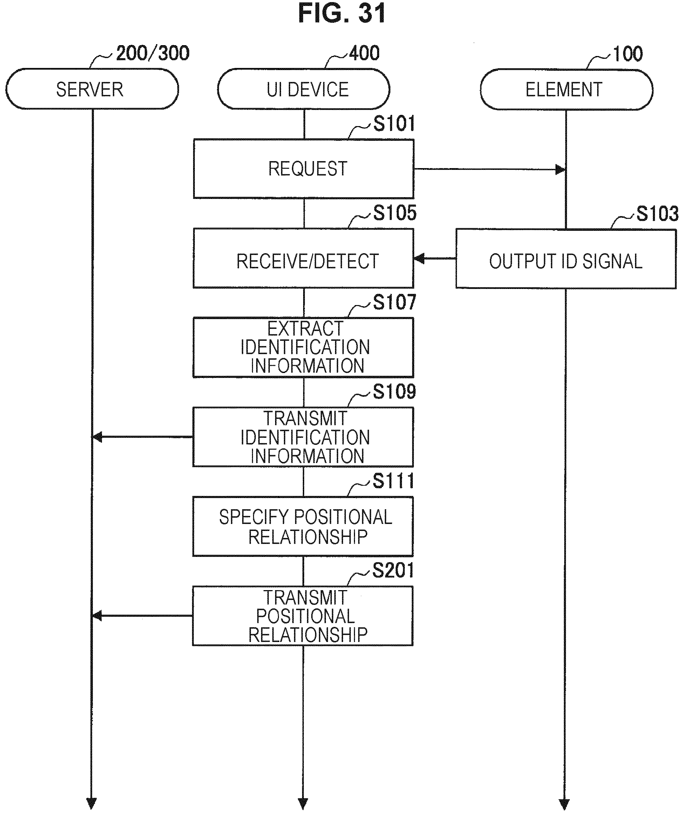

FIG. 31 is a sequence diagram illustrating a first procedure of the process in the second embodiment of the present disclosure. FIG. 31 illustrates the process from the transmission of a request for a signal from the UI device 400 to the element 100 to the transmission of the identification information of the element 100 and the information indicating the positional relationship between the UI device 400 and the element 100 to the server 200 or 300.

In the illustrated example, the process in S101 to S111 is similar to that of the first embodiment described with reference to FIG. 24, and thus repeated description will be omitted herein. In the present embodiment, the setting information of the element 100 is presented by the presentation device 500, and thus the server 200 or 300 does not transmit the setting information of the element 100 extracted based on the identification information to the UI device 400. Alternatively, similar to the identification information, the UI device 400 transmits the information indicating the positional relationship between the UI device 400 and the element 100, which is specified in S111, to the server 200 or 300 (S201).

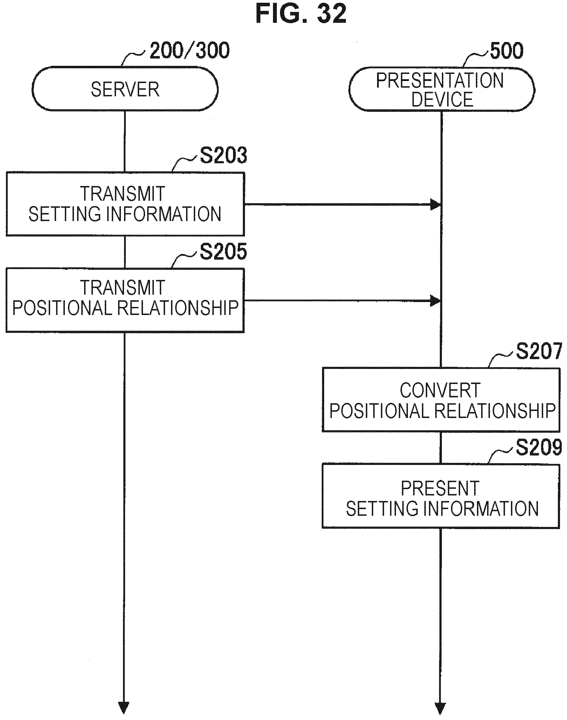

FIG. 32 is a sequence diagram illustrating a second procedure of the process in the second embodiment of the present disclosure. In FIG. 32, subsequent to the first procedure illustrated in FIG. 31, there is illustrated a process from the transmission of the setting information and the positional relationship from the server 200 or 300 to the presentation device 500 to the presentation of the setting information by the presentation device 500 in association with the element 100.

In the illustrated example, the server 200 or 300 transmits the setting information of the element 100 extracted based on the identification information transmitted from the UI device 400 and the information indicating the positional relationship between the UI device 400 and the element 100 to the presentation device 500 (S203 and S205). The transmission order of these pieces of information is optional. In the presentation device 500, the positional relationship conversion unit 523 converts the information received in S205, that is, the information indicating the positional relationship between the UI device 400 and the element 100 into the information indicating the positional relationship between the presentation device 500 and the element 100 (S207). Furthermore, the presentation control unit 524 presents the setting information based on the positional relationship between the presentation device 500 and the element 100 acquired in S207 (S209). More specifically, the setting information is displayed on a display included in the output unit 530 of the presentation device 500 or is projected by a projector included in the output unit 530.

### (Modified example)

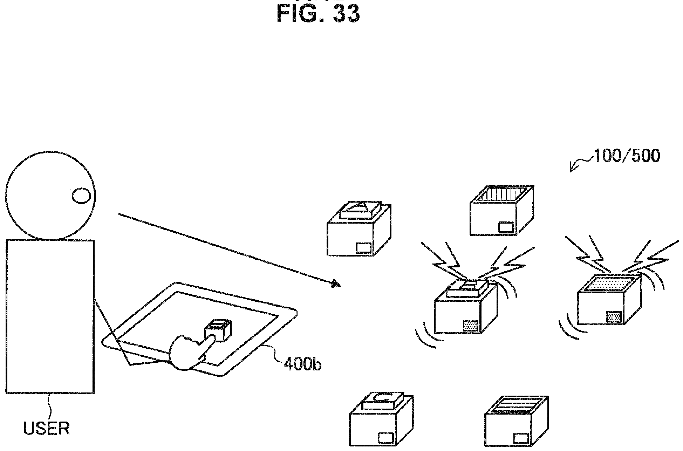

FIG. 33 is a diagram illustrated to describe a modified example of the second embodiment of the present disclosure. In FIG. 33, the element 100 serving as one or more devices in the system 10 functions as the presentation device 500. More specifically, in the illustrated example, there are a plurality of the elements 100 near the UI device 400. At least some of these elements 100 function as the presentation device 500. The element 100 as described above receives its own setting information from the manager 200 or the server 300 (not shown) through the communication unit 110. Furthermore, the element 100 outputs the received setting information through an output device, such as a display, a speaker, and a lamp, included in the function unit 130, as one example. In other words, in the present modified example, the setting information of the element 100 is presented by the element 100 itself.

The UI device 400 may be the tablet 400b as illustrated, as one example. The tablet 400b detects a neighboring element 100 by receiving the wireless signal or light emitting signal outputted from the neighboring element 100. Furthermore, the tablet 400b specifies the ID of the element 100 in the system 10 by decoding the received signal and transmits the specified ID to the manager 200 or the server 300. The ID to be transmitted may be used to specify the target element 100, and may be information indicating that the element 100 and the tablet 400b are close to each other (a type of positional relationship).

The manager 200 or the server 300, when receiving the ID of the element 100, extracts the setting information of the element 100 based on the ID and transmits the setting information to the relevant element 100. The element 100 outputs the received setting information through an output device, such as a display, a speaker, and a lamp, included in the function unit 130, as one example.

The second embodiment of the present disclosure has been described. In the present embodiment, the setting information is presented, in association with the element 100, by the presentation device 500 rather than the UI device 400, which outputs the signal to be received by the element 100. Thus, as one example, the UI device 400 does not necessarily include an output device, such as a display and a projector, for presenting the setting information in association with the element 100. In the modified example in which the element 100 itself functions as the presentation device 500, it is possible to present the setting information in association with the corresponding element 100, even when the UI device 400 does not necessarily specify the specific positional relationship with the element 100.

In the example described above, although the server 200 or 300 is interposed between the UI device 400 and the presentation device 500, in another example, the information may be locally exchanged between the UI device 400 and the presentation device 500 without intervention of the server 200 or 300. As one example, when the setting information of the element 100 is held in the UI device 400 or the presentation device 500 at least temporarily, the UI device 400 may transmit directly the identification information or the setting information to the presentation device 500.

### (2-3. Third embodiment)

A third embodiment of the present disclosure will be described. In the present embodiment, portions that are not otherwise described can have a similar configuration to the first embodiment.

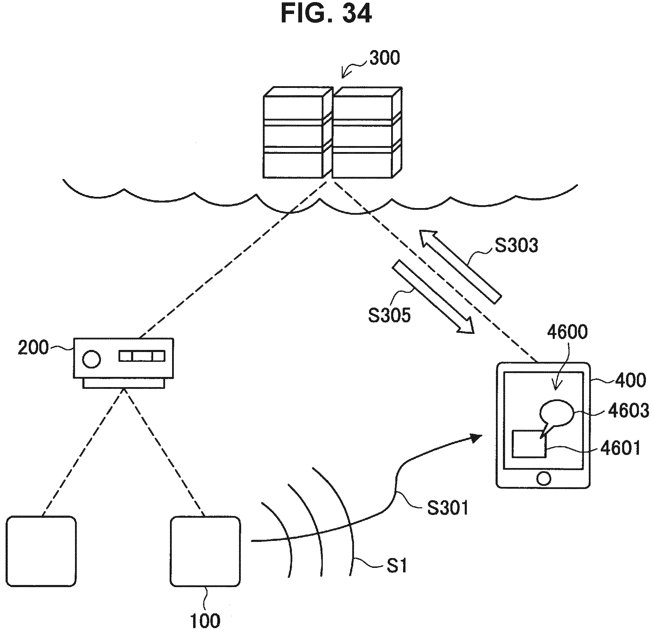

FIG. 34 is a schematic diagram illustrating an exemplary configuration of the third embodiment of the present disclosure. Referring to FIG. 34, in the present embodiment, the element 100 is connected to the manager 200 using Bluetooth (registered trademark), Wi-Fi, or the like, and broadcasts continuously the wireless signal S1 (e.g., Bluetooth advertising). In this state, when the UI device 400 approaches the element 100, the UI device 400 receives the wireless signal S1 outputted from the element 100 (S301).

The UI device 400 decodes the wireless signal S1 at the time when the wireless signal S1 exceeds a predetermined intensity, and acquires the identification information (ID) of the element 100. Furthermore, the UI device 400 transmits the acquired identification information to the server 300 to inquire the setting information of the element 100 (303). In response to the inquiry, the server 300 transmits the setting information of the element 100, for example, information including the name given to the element 100 in the system 10, the communication state between the element 100 and the manager 200, or the remaining battery level of the element 100, to the UI device 400 (S305).

On the basis of the information received from the server 300, an UI screen 4600 is displayed on a display of the UI device 400. On the UI screen 4600, as one example, an icon 4601 indicating the element 100 and a setting information display of the element 100 are displayed. The icon 4601 and the setting information display 4603 are displayed close together, are connected by a link, or are associated with each other.

The present embodiment is different from the first and second embodiments in that the UI device 400 does not necessarily acquire an image including the element 100. The UI device 400 specifies that the UI device 400 and the element 100 are close to each other based on the wireless signal S1 outputted from the UI device 400, and acquires the identification information of the element 100 by decoding the wireless signal S1. Thus, in the present embodiment, the UI device 400 may be a device that is configured not to include an imaging unit.

In the present embodiment, even when the UI device 400 is configured to include an imaging unit, the element 100 may not necessarily be visually recognizable from the viewpoint of the UI device 400. As one example, the element 100 may be arranged in the inner side of an object, and in this case, it is not necessarily be visually recognizable from the outside. In such a case, the element 100 is detected based on the wireless signal S1, and the UI screen 4600 that displays the setting information of the element 100 is provided using the icon 4601, thereby making it possible to check or edit the setting information of the element 100 with ease.

### (3. Hardware configuration)

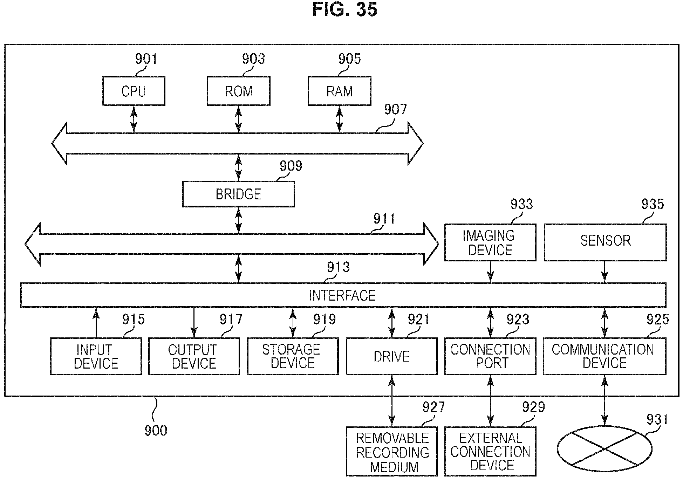

Next, a hardware configuration of an information processing apparatus according to an embodiment of the present disclosure will be described with reference to FIG. 35. FIG. 35 is a block diagram illustrating a hardware configuration example of an information processing apparatus according to an embodiment of the present disclosure. An information processing apparatus 900 illustrated in the drawing can implement, for example, the element 100, the manager 200, the server 300, the UI device 400, and/or the presentation device 500 in the above-described embodiments.

The information processing apparatus 900 includes a central processing unit (CPU) 901, a read only memory (ROM) 903, and a random access memory (RAM) 905. In addition, the information processing apparatus 900 may include a host bus 907, a bridge 909, an external bus 911, an interface 913, an input device 915, an output device 917, a storage device 919, a drive 921, a connection port 923, and a communication device 925. Further, the information processing apparatus 900 may include an imaging device 933 and a sensor 935 as necessary. The information processing apparatus 900 may include a processing circuit such as a digital signal processor (DSP) or application specific integrated circuit (ASIC), alternatively or in addition to the CPU 901.

The CPU 901 serves as an operation processor and a controller, and controls all or some operations in the information processing apparatus 900 in accordance with various programs recorded in the ROM 903, the RAM 905, the storage device 919 or a removable recording medium 927. The ROM 903 stores programs and operation parameters which are used by the CPU 901. The RAM 905 temporarily stores program which are used in the execution of the CPU 901 and parameters which are appropriately modified in the execution. The CPU 901, ROM 903, and RAM 905 are connected to each other via the host bus 907 configured to include an internal bus such as a CPU bus. In addition, the host bus 907 is connected to the external bus 911 such as a PCI (Peripheral Component Interconnect/Interface) bus via the bridge 909.

The input device 915 is a device which is operated by a user, such as a mouse, a keyboard, a touch panel, buttons, switches and a lever. The input device 915 may be, for example, a remote control unit using infrared light or other radio waves, or may be an external connection device 929 such as a portable phone operable in response to the operation of the information processing apparatus 900. Furthermore, the input device 915 includes an input control circuit which generates an input signal on the basis of the information which is input by a user and outputs the input signal to the CPU 901. By operating the input device 915, a user can input various types of data to the information processing apparatus 900 or issue instructions for causing the information processing apparatus 900 to perform a processing operation.

The output device 917 includes a device capable of visually or audibly notifying the user of acquired information. The output device 917 may include a display device such as a liquid crystal display (LCD), a plasma display panel (PDP), and an organic EL (Electro-Luminescence) displays, an audio output device such as a speaker or a headphone, and a peripheral device such as a printer. The output device 917 may output the results obtained from the process of the information processing apparatus 900 in a form of a video such as text or an image, and an audio such as voice or sound.

The storage device 919 is a device for data storage which is configured as an example of a storage unit of the information processing apparatus 900. The storage device 919 includes, for example, a magnetic storage device such as a hard disk drive (HDD), a semiconductor storage device, an optical storage device, or a magneto-optical storage device. The storage device 919 stores programs to be executed by the CPU 901, various data, and data obtained from the outside.

The drive 921 is a reader/writer for the removable recording medium 927 such as a magnetic disk, an optical disk, a magneto-optical disk, or a semiconductor memory, and is embedded in the information processing apparatus 900 or attached externally thereto. The drive 921 reads information recorded in the removable recording medium 927 attached thereto, and outputs the read information to the RAM 905. Further, the drive 921 writes in the removable recording medium 927 attached thereto.

The connection port 923 is a port used to directly connect devices to the information processing apparatus 900. The connection port 923 may include a universal serial bus (USB) port, an IEEE1394 port, and a small computer system interface (SCSI) port. The connection port 923 may further include an RS-232C port, an optical audio terminal, an HDMI (registered trademark) (High-Definition Multimedia Interface) port, and so on. The connection of the external connection device 929 to the connection port 923 makes it possible to exchange various data between the information processing apparatus 900 and the external connection device 929.

The communication device 925 is, for example, a communication interface including a communication device or the like for connection to a communication network 931. The communication device 925 may be, for example, a communication card for a wired or wireless local area network (LAN), Bluetooth (registered trademark), wireless USB (WUSB) or the like. In addition, the communication device 925 may be a router for optical communication, a router for asymmetric digital subscriber Line (ADSL), a modem for various kinds of communications, or the like. The communication device 925 can transmit and receive signals to and from, for example, the Internet or other communication devices based on a predetermined protocol such as TCP/IP. In addition, the communication network 931 connected to the communication device 925 may be a network or the like connected in a wired or wireless manner, and may be, for example, the Internet, a home LAN, infrared communication, radio wave communication, satellite communication, or the like.

The imaging device 933 is a device that generates an image by imaging a real space using an image sensor such as a charge-coupled device (CCD) or a complementary metal-oxide-semiconductor (CMOS) sensor, as well as various members such as one or more lenses for controlling the formation of a subject image on the image sensor, for example. The imaging device 933 may be a device that takes still images, and may also be a device that takes moving images.

The sensor 935 is any of various sensors such as an acceleration sensor, a gyro sensor, a geomagnetic sensor, an optical sensor, or a sound sensor, for example. The sensor 935 acquires information regarding the state of the information processing apparatus 900, such as the orientation of the case of the information processing apparatus 900, as well as information regarding the environment surrounding the information processing apparatus 900, such as the brightness or noise surrounding the information processing apparatus 900, for example. The sensor 935 may also include a Global Positioning System (GPS) sensor that receives GPS signals and measures the latitude, longitude, and altitude of the apparatus.

The foregoing thus illustrates an exemplary hardware configuration of the information processing apparatus 900. Each of the above components may be implemented using general-purpose members, but may also be implemented in hardware specialized in the function of each component. Such a configuration may also be modified as appropriate according to the technological level at the time of the implementation.

### (4. Supplement)

The embodiments of the present disclosure may include the terminal apparatus, the system, the information providing method executed in the terminal apparatus or the system, the program for causing the terminal apparatus to function, and the non-transitory tangible media having the program recorded thereon, which have been described above, for example.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.
(1) A terminal device including:
   a signal reception unit configured to receive a first signal outputted from one or more devices in a system;
   a positional relationship specifying unit configured to specify a positional relationship between the terminal device and the one or more devices based on the first signal;
   an identification information extraction unit configured to extract identification information of the one or more devices in the system from the first signal; and
   means for presenting setting information of the one or more devices in the system in association with the one or more devices based on the identification information and the positional relationship.
(2) The terminal device according to (1),
   wherein the means includes
   an identification information transmission unit configured to transmit the identification information to a server,
   a setting information reception unit configured to receive, from the server, setting information of the one or more devices specified based on the identification information, and
   a presentation control unit configured to cause the received setting information to be presented in association with the one or more devices.
(3) The terminal device according to (1),
   wherein the means includes
   an identification information transmission unit configured to transmit the identification information to a server, and
   a positional relationship transmission unit configured to transmit information indicating the positional relationship to the server, and
   the server provides setting information of the one or more devices specified based on the identification information for a presentation device configured to present the setting information in association with the one or more devices.
(4) The terminal device according to (3),
   wherein the one or more devices include a device configured to function as the presentation device.
(5) The terminal device according to any one of (1) to (3),
   wherein the setting information is presented by a display on which the one or more devices are displayed in a reflective mode.
(6) The terminal device according to (5),
   wherein the display displays a live view image including the one or more devices.
(7) The terminal device according to (5),
   wherein the display displays an image including an icon of the one or more devices.
(8) The terminal device according to any one of (1) to (3),
   wherein the setting information is presented by a display on which the one or more devices are displayed in a transmissive mode.
(9) The terminal device according to any one of (1) to (8), further including:
   an operation acceptance unit configured to accept a setting change operation on the one or more devices; and
   an operation information transmission unit configured to transmit operation information corresponding to the setting change operation to a server,
   wherein the operation acceptance unit accepts the setting change operation through a graphical user interface (GUI) provided in a display on which the one or more devices are displayed.
(10) The terminal device according to any one of (1) to (3),
   wherein the setting information is presented by a projector configured to project an image onto a real space near the one or more devices.
(11) The terminal device according to any one of (1) to (10), further including:
   an operation acceptance unit configured to accept a setting change operation on the one or more devices; and
   an operation information transmission unit configured to transmit operation information corresponding to the setting change operation to a server,
   wherein the operation acceptance unit accepts the setting change operation that is performed through a natural user interface (NUI) by a user on the one or more devices.
(12) The terminal device according to any one of (1) to (11),
   wherein the signal reception unit receives a second signal outputted from the one or more devices, and
   the terminal device further includes
   a state information extraction unit configured to extract state information of the one or more devices from the second signal, and
   a state information transmission unit configured to transmit the state information to a server.
(13) The terminal device according to any one of (1) to (12), further including:
   an imaging unit configured to acquire an image including the one or more devices,
   wherein the first signal includes a light emitting signal outputted by a light emitting device provided in the one or more devices, and
   the positional relationship specifying unit specifies the positional relationship by extracting the light emitting signal from the image.
(14) The terminal device according to any one of (1) to (13),
   wherein the first signal includes a wireless signal transmitted by the one or more devices, and
   the positional relationship specifying unit specifies the positional relationship based on an intensity of the wireless signal.
(15) The terminal device according to any one of (1) to (14),
   wherein the positional relationship specifying unit specifies whether the terminal device and the one or more devices are close to each other.
(16) The terminal device according to any one of (1) to (15),
   wherein the positional relationship specifying unit specifies a distance between the terminal device and the one or more devices.
(17) A system including:
   one or more devices; and
   a terminal device,
   wherein the one or more devices output a first signal, and
   the terminal device includes
      a signal reception unit configured to receive the first signal,
      a positional relationship specifying unit configured to specify a positional relationship between the terminal device and the one or more devices based on the first signal,
      an identification information extraction unit configured to extract identification information of the one or more devices in the system from the first signal, and
      means for presenting setting information of the one or more devices in the system in association with the one or more devices based on the identification information and the positional relationship.
(18) A method of information presentation, the method including:
   outputting a first signal by one or more devices in a system;
   receiving the first signal by a terminal device;
   specifying a positional relationship between the terminal device and the one or more devices based on the first signal and extracting identification information of the one or more devices in the system from the first signal, by using a processing circuit; and
   presenting setting information of the one or more devices in the system in association with the one or more devices based on the identification information and the positional relationship.
(19) A program executed in a processing circuit of a terminal device to implement:
   a function of receiving a first signal outputted from one or more devices in a system;
   a function of specifying a positional relationship between the terminal device and the one or more devices based on the first signal;
   a function of extracting identification information of the one or more devices in the system from the first signal; and
   means for presenting setting information of the one or more devices in the system in association with the one or more devices based on the identification information and the positional relationship.

### Reference Signs List

- 10: system
- 100: element
- 110: communication unit
- 120: control unit
- 130: function unit
- 135: light emitting device
- 140: power unit
- 200: manager
- 210: communication unit
- 220: control unit
- 230: storage unit
- 300: server
- 310: communication unit
- 320: control unit
- 330: storage unit
- 400: UI device
- 410: communication unit
- 415: imaging unit
- 420: control unit
- 430: input and output unit
- 500: presentation device
- 510: communication unit
- 515: imaging unit
- 520: control unit
- 530: output unit

## Claims

1. A method of information presentation, the method comprising:
providing information and receiving a manipulation input by an input and output unit (430) of a terminal device,
receiving a signal in the input and output unit (430) from a speaker device (100);
extracting identification information of the speaker device (100) from the signal;
extracting state information of the speaker device (100) from the signal;
specifying a positional relationship about the speaker device (100) by the signal;
presenting information of the speaker device (100) in the system (10) in association with the speaker device (100) based on the identification information, the state information or the positional relationship;
providing a user interface on the input and output unit (430) of the terminal device.

2. The method of information presentation according to claim 1, further comprising:
transmitting setting information to a server (300), wherein the setting information is received by the manipulation input on the input and output unit (430).

3. The method of information presentation according to any of the claims 1 or 2, further comprising:
specifying the setting information is based on an ID of the speaker.

4. The method of information presentation according to claim 3, further comprising:
transmitting information indicating the positional relationship along with the ID of the speaker.

5. The method of information presentation according to anyone of the previous claims,
wherein the signal includes a wireless signal (S1) transmitted by the speaker device (100).

6. The method of information presentation according to anyone of the previous claims,
wherein the positional relationship specifying unit (424) is configured to specify the positional relationship based on the signal.

7. The method of information presentation according to anyone of the previous claims,
wherein the positional relationship specifying unit (424) is configured to specify
whether the terminal device (400) and the speaker device (100) can perform direct wireless communication with each other.

8. A system comprising:
a button (100) configured to receive a manipulation input;
a speaker device (100) configured to provide audio information, the speaker device (100) comprising:
a communication unit (110) configured to transmit a signal to a terminal device in a system (10);
wherein the signal includes at least one of an identification information and a state information of the speaker device (100).
and wherein the communication unit (110) is configured to receive contents transmitted from a server (300) based on a setting information specified by a terminal device (400).

9. The system according to claim 8,
wherein the signal includes a wireless signal (S1) transmitted by the speaker device (100).

10. The system according to claim 8 or 9,
wherein the signal is indicative of a positional relationship of the speaker device (100).

11. The system according to anyone of claims 8 to 10, wherein the setting information is based on an ID of the speaker device (100).

12. The system according to claim 11, wherein the information indicating the positional relationship is transmitted along with the ID of the speaker device (100).
